(19) Europäisches Patentamt / European Patent Office / Office européen des brevets

(11) **EP 4 424 486 A1**

(12) **EUROPEAN PATENT APPLICATION**
published in accordance with Art. 153(4) EPC

(43) Date of publication:
**04.09.2024 Bulletin 2024/36**

(21) Application number: **22887058.0**

(22) Date of filing: **26.10.2022**

(51) International Patent Classification (IPC):
**B29B 11/16** (2006.01)     **B29K 105/10** (2006.01)
**C08J 5/04** (2006.01)     **C08J 5/24** (2006.01)

(52) Cooperative Patent Classification (CPC):
**B29B 11/16; C08J 5/04; C08J 5/24;** Y02T 50/40

(86) International application number:
**PCT/JP2022/039900**

(87) International publication number:
**WO 2023/074733 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.10.2021   JP 2021175395
27.10.2021   JP 2021175396**

(71) Applicant: **Toray Industries, Inc.
Tokyo 103-8666 (JP)**

(72) Inventors:
• **KONO, Yoshikazu
Iyo-gun
Ehime 791-3193 (JP)**
• **OCHI, Takashi
Iyo-gun
Ehime 791-3193 (JP)**
• **SUGIMOTO, Atsuki
Iyo-gun
Ehime 791-3193 (JP)**

(74) Representative: **Mewburn Ellis LLP
Aurora Building
Counterslip
Bristol BS1 6BX (GB)**

(54) **CARBON FIBER-REINFORCED COMPOSITE MATERIAL**

(57)     [Problem to be solved] An object of the present invention is to provide a CFRP in which the risk of edge glow is decreased without relying on expensive electroconductive particles. The gist of the present invention is to provide a carbon fiber-reinforced composite material including carbon fiber sheets including unidirectionally arranged carbon fibers and laminated multidirectionally one on another, the composite material being impregnated with a matrix resin, which is cured, and having an electroconductivity in the thickness direction of 10 S/m or more, wherein, when a region in which the carbon fibers have the same angle of fiber orientation consecutively in the thickness direction is defined as a Layer, the carbon fiber sheet includes at least one Layer that simultaneously satisfies the following (1) to (3) (the Layer is referred to as "Specific Layer"), and at least one low Vcf domain in the Specific Layer contains a particle(s): (1) the thickness of the Layer is 150 $\mu$m or more; (2) the mean value of the carbon fiber volume content factor, Vcf, of the Layer is 50% or more; and (3) a low Vcf domain(s) having a Vcf of 0.5 or less, when the mean value of the Vcf is defined as 1, is/are included in the surface layer(s) and in the inner layer of the Specific Layer.

FIG. 1

**Description**

Technical Field

The present invention relates to a carbon fiber-reinforced composite material having an excellent lightning resistance.

Background Art

Fiber-reinforced composite materials (hereinafter, each referred to as "FRP" for short) have excellent mechanical properties, such as strength and stiffness, and heat resistance as well as excellent corrosion resistance while being lightweight, and thus have been used in a number of fields, such as aerospace, automobile, railroad vehicle, marine vessel and sports good applications. In applications in which high mechanical properties are required, carbon fibers (hereinafter, referred to as "CFs" for short) having an excellent specific strength and inelastic modulus are used as reinforced fibers, and epoxy resins having an excellent adhesion to CFs, heat resistance and elastic modulus as well as a low curing shrinkage are often used as matrix resins. The proportion of carbon fiber-reinforced composite materials (hereinafter, each sometimes referred to as "CFRP" for short) used in aircraft structural members has been increasing in recent years, and it is expected that the proportion of use of CFRPs will continue to increase in the future. In recent years, expectations for high-rate production and fastener-less joining have caused an increase in the number of cases in which thermoplastic resins are used as matrix resins. Examples of the CFRP include: a CFRP formed by laminating CF sheets in which CFs are aligned unidirectionally (UD); a CFRP formed by laminating CF fabrics in which CFs are arranged multidirectionally; and a CFRP formed by laminating sheets in which CFs are arranged randomly. UD CF sheets tend to be used in cases where the mechanical properties of the resulting CFRP are prioritized, and CF fabrics tend to be used in the case of producing a CFRP having a complex shape. Since mechanical properties are prioritized in the application of aircraft structural materials, a CFRP formed by laminating UD CF sheets multidirectionally is widely used.

CFs are electrical conductors, and a matrix resin generally serves as an insulator in many cases. Since CFs themselves serve as electroconductive paths, the electroconductivity in the fiber axis direction (hereinafter, referred to as "fiber direction" for short) of a CFRP is relatively high. In the direction (hereinafter, referred to as "orthogonal direction" for short) orthogonal to the fiber axis of a CFRP, on the other hand, the contacts between the CFs form electroconductive paths, and thus, the electroconductivity is generally as low as about 1/1,000 of the electroconductivity in the fiber direction. However, even the electroconductivity in the fiber direction of a CFRP is generally as low as about 1/1,000 compared to the electroconductivity of a metal such as aluminum. In this manner, a CFRP is inferior to a metallic material in electroconductivity, and has an anisotropy in the electroconductivity between the fiber direction and the orthogonal direction. Therefore, in cases where a certain electric current flows into a CFRP, a higher voltage is applied to the CFRP as compared the case of a metallic material. Further, a CFRP composed of a plurality of CF sheets having different angles of fiber orientation has a very complex electric current distribution.

Due to having complex electrical properties as described above, there is a concern that a CFRP used in an aircraft may cause a damage due to lightning. Since it is difficult to disperse lightning current in a CFRP as can in a metallic material, a CFRP is susceptible to a problem such as the occurrence of damage due to local concentration of lightning current, or the generation of sparks due to the application of a high voltage thereto. Because of this, an aircraft with a CFRP is provided with lightning protection, for example, providing a metal mesh or covering a location where sparks can occur with a sealant, or the like, in order to ensure safety. However, such lightning protection causes problems of increased weight and increased cost. In order to reduce lightning protection and to further improve the safety against lightning, it is required to increase the electrical properties of a CFRP itself.

One form of sparking around a fuel tank is so-called "edge glow". The edge glow refers to a luminescence phenomenon (glow) that occurs on the side surface (edge) of an end of a member, and studies for clarifying the mechanism of occurrence have been conducted. Non-Patent Literature 1 compares the electric potential analysis of a CFRP and the experimental results of the occurrence of edge glow, and discusses the mechanism in detail. FIG. 8 in Non-Patent Literature 1 shows that a CFRP formed by laminating CF sheets having various angles of fiber orientation has a particularly large electric potential difference between the CF sheets having different angles of fiber orientation. Further, according to FIG. 18 in Non-Patent Literature 1, a location where the occurrence of edge glow was identified by an experiment was a location where the electric potential difference between the CF sheets having different angles of fiber orientation was large. Therefore, decreasing the electric potential difference between the CF sheets having different angles of fiber orientation is thought to be effective for reducing edge glow.

In general, increasing the electroconductivity in the thickness direction of a CFRP is thought to be effective for decreasing the electric potential difference between the CF sheets having different angles of fiber orientation, for the purpose of reducing edge glow. Therefore, a number of material designs for improving the electroconductivity in the thickness direction of a CFRP have been proposed. Of these, as disclosed in Patent Literatures 1 to 3, a technique of arranging electroconductive particles between CF sheets having different angles of fiber orientation provides a large effect in improving the electroconductivity in the thickness direction of the CFRP.

Patent Literature 1 discloses a technique of arranging electroconductive particles between CF sheets having different angles of fiber orientation. The Examples in Patent Literature 1 demonstrate that the volume resistivity value in the thickness direction of the CFRP is decreased and the electroconductivity is improved, as the amount of the electroconductive particles is increased in the order from Examples 1 to 6 and 8 to 13. Patent Literature 2 discloses a technique of arranging carbon particles as electroconductive particles between CF sheets having different angles of fiber orientation. The Examples in Patent Literature 2 demonstrate that the volume resistivity value in the thickness direction of the CFRP is decreased and the electroconductivity is improved, as the amount of carbon particles is increased in the order from materials 1, 2, 3 and 4. Patent Literature 3 discloses a technique of arranging carbon particles as electroconductive particles between CF sheets having different angles of fiber orientation, and further adding carbon black, which is nano particles, as an electroconductive aid. The Examples in Patent Literature 3 demonstrate that the electroconductivity in the thickness direction of CFRP is improved as compared to the CFRPs of Comparative Examples 5 and 6 in which electroconductive particles are arranged between the layers, by further adding an electroconductive aid as in Examples 16 and 17.

Citation List

Patent Literatures

   Patent Literature 1: WO 2008/018421
   Patent Literature 2: WO 2011/027160
   Patent Literature 3: WO 2012/124450

Non-Patent Literature

Non-Patent Literature 1: R. B. Greegor et al., "Finite Element Simulation and Experimental Analysis of Edge Glow for a Generic, 16-Ply Carbon Fiber Reinforced Plastic Composite Laminate", ICOLSE 15 Paper, 2015

Summary of Invention

Technical Problem

However, the demand for the electroconductivity required for reducing edge glow is high, and there is a necessity to greatly improve the electroconductivity. In Patent Literature 1, the volume resistivity values in the thickness direction of CFRPs shown in the Examples are $2.0 \times 10^3$ S2cm or more (electroconductivity of 0.05 S/m or less), failing to obtain a sufficient electroconductivity. Patent Literatures 1 and 2 show that it is effective to increase the amount of the electroconductive particles to be arranged between the CF sheets for improving the electroconductivity. However, a high electroconductivity is required for reducing edge glow, and it is necessary to add a large amount of electroconductive particles. As can be seen from Examples 1 to 6 and 8 to 13 in Patent Literature 1, and the materials 1, 2, 3 and 4 in Patent Literature 2, the improvement in electroconductivity is decreased as the amount of electroconductive particles is increased, and there is a limit in the improvement in electroconductivity by the addition of electroconductive particles. As can be seen from the comparison of Comparative Examples 5 and 6 with Examples 16 and 17 in Patent Literature 3, the electroconductivity is improved by the addition of an electroconductive aid, but only to a limited extent, and the volume resistivity values in the thickness direction of CFRPs shown in the Examples, in which electroconductive particles and an electroconductive aid are used in combination, are 36 $\Omega$cm or more (electroconductivity of 3 S/m or less), failing to obtain a sufficient electroconductivity. Further, as can be seen from Comparative Examples 7 to 9, the improvement in electroconductivity by the addition of an electroconductive aid is also limited, and the volume resistivity values are 3.6 $\times 10^2$ $\Omega$cm or more (electroconductivity of 0.3 S/m or less), failing to obtain a sufficient electroconductivity. In addition, the electroconductive particles used in Patent Literatures 1 to 3 are generally expensive, and it is preferred to decrease the amount of the particles to be added.

As described above, decreasing the amount of the electroconductive particles to be added and decreasing the risk of edge glow by improving the electroconductivity are antinomic.

An object of the present invention is to provide a CFRP in which the risk of edge glow is decreased without relying on expensive electroconductive particles, by controlling the structure of the CFRP. In other words, the present invention provides a CFRP in which the risk of edge glow is greatly decreased, even in cases where electroconductive particles are used in the same amount as, or in an amount smaller than, that in prior art. Further, the present invention provides a CFRP in which the risk of edge glow is decreased without using electroconductive particles.

Solution to Problem

A carbon fiber-reinforced composite material including carbon fiber sheets including unidirectionally arranged carbon fibers and laminated multidirectionally one on another, the composite material being impregnated with a matrix resin, which is cured, and having an electroconductivity in the thickness direction of 10 S/m or more, wherein, when a region in which the carbon fibers have the same angle of fiber orientation consecutively in the thickness direction is defined as a Layer, the carbon fiber sheet includes at least one Layer that simultaneously satisfies the following (1) to (3), and at least one low Vcf domain is present in the Specific Layer, the low Vcf domain containing a particle(s):

(1) the thickness of the Layer is 150 $\mu$m or more;
(2) the mean value of the carbon fiber volume content factor, Vcf, of the Layer is 50% or more; and
(3) a low Vcf domain(s) having a Vcf of 0.5 or less, when the mean value of the Vcf is defined as 1, is/are included in the surface layer(s) and in the inner layer of the Specific Layer.

Advantageous Effects of Invention

The CFRP according to the present invention provides a sufficient effect of reducing edge glow, even in cases where electroconductive particles are used in an amount smaller than that in prior art. Further, the CFRP provides the effect of further reducing edge glow, as compared to a CFRP of prior art in which electroconductive particles are arranged between CF sheets having different angles of fiber orientation. In addition, variation in the effect of reducing edge glow is small in the CFRP according to the present invention, regardless of the in-plane location of the CF sheets impregnated with the resin used. The use of such a CFRP in an aircraft enables lightning protection to be more efficient overall. Moreover, the present invention provides an advantage in that the induction heating temperature can be increased, in induction welding mainly used for a CFRP in which the matrix resin is composed of a thermoplastic resin.

Brief Description of Drawings

FIG. 1 is a cross-sectional view showing one embodiment of the CFRP according to the present invention.
FIG. 2 is a cross-sectional image of one embodiment of the CFRP according to the present invention.
FIG. 3 is a binarized image of the image shown in FIG. 2.
FIG. 4 shows a graph of the distribution in the Z-axis direction of the Vcf in the cross section shown in FIG. 3, and partial enlarged views thereof.
FIG. 5 is a graph of the distribution in the Z'-axis direction of the Vcf in the Layer L1 in FIG. 3.
FIG. 6 is a schematic diagram illustrating the method of identifying low Vcf domains in the binarized image of FIG. 2.
FIG. 7 is a distribution diagram showing the results of calculating the Vcf for every pixel in the binarized image of FIG. 2.
FIG. 8 is a distribution diagram showing the locations identified as low Vcf domains, in the diagram shown in FIG. 7.
FIG. 9 shows a distribution diagram and a cross-sectional view, showing the relationship between the low Vcf domains and the particles.
FIG. 10 is a cross-sectional view showing one form of a conventional ordinary CFRP.
FIG. 11 is a cross-sectional view showing one form of a conventional interlayer-reinforced CFRP.
FIG. 12 is a cross-sectional photograph showing a form of a conventional interlayer-reinforced CFRP.
FIG. 13 is a binarized image of the image shown in FIG. 12.
FIG. 14 shows a graph of the distribution in the Z-axis direction of the Vcf in the cross section shown in FIG. 12, and partial enlarged views thereof.
FIG. 15 is a graph of the distribution in the Z'-axis direction of the Vcf in the Layer L4 in FIG. 12.
FIG. 16 is a cross-sectional view showing a form of a CFRP different from the present invention.
FIG. 17 is a top view of a CFRP panel.

Description of Embodiments

The present invention will be described below in further detail.

In the present invention, the following terms have the following meanings, respectively.

The term "low Vcf domain" refers to a region (domain) identified by the measurement method as will be described in the section of "Identification of Low Vcf Domains".

The term "Layer" refers to a laminar region constituting a part of a carbon fiber-reinforced composite material, which is a laminar region in which carbon fibers included in the region have the same angle of fiber orientation, and have an angle of fiber orientation different from that of carbon fibers included in an adjacent laminar region. That is, the "Layer" refers to a laminar region whose boundary surface with an adjacent laminar region is defined by the angle of fiber orientation of the carbon fibers included in the region.

The term "Specific Layer" refers to a Layer, among the Layers, that simultaneously satisfies the following (1) to (3):

(1) the thickness of the Layer is 150 $\mu$m or more;
(2) the mean value of the carbon fiber volume content factor, Vcf, is 50% or more; and
(3) a low Vcf domain(s) having a Vcf of 0.5 or less, when the mean value of the Vcf is defined as 1, is/are included in the surface layer(s) and in the inner layer of the Specific Layer.

The term "mean value" refers to an arithmetic mean value, unless otherwise specified. The mean value is also determined for the data obtained by a measuring instrument, in accordance with the setting of the measuring instrument.

< Carbon Fiber Sheet >

CFs are usually used in the form of a "tow" obtained by assembling from about 1,000 to 1,000,000 monofilaments in the form of a tape. In a carbon fiber sheet (hereinafter, referred to as "CF sheet") to be used in the present invention, CFs are aligned unidirectionally, and the CF sheet can be obtained preferably by arranging the tows. As described above, a CF sheet in which CFs are arranged unidirectionally (UD) in the longitudinal direction of the CFs, or a carbon fiber-reinforced resin (hereinafter, referred to as "CF-reinforced resin") obtained by impregnating said CF sheet with a matrix resin, is referred to as a UD material. One form of the UD material may be, for example, a non-crimp fabric (NCF) in which UD-arranged CF sheets are sawn together with a stitching yarn.

< Carbon Fiber-Reinforced Composite Material (CFRP) >

The CFRP according to the present invention can be obtained by molding intermediate base materials each formed by impregnating the CF sheet with a matrix resin. In the case of using a prepreg as an intermediate base material, prepregs can be laminated and molded. The CFRP can also be obtained by the resin infusion method, in which a resin is injected into a laminate formed by layering unimpregnated CF sheets, followed by molding. In cases where the mechanical strength of the CFRP is prioritized, it is preferred to use prepregs. In the CFRP according to the present invention, UD materials are laminated multidirectionally. The expression "laminated multidirectionally" refers to a state in which a plurality of UD materials are layered varying the orientation angles of fibers thereof. That is, CFs are oriented in two different directions or three or more different directions, in the CFRP according to the present invention. Considering the use as an aircraft structural member, preferred is a CFRP obtained by multidirectionally laminating UD prepregs formed using unidirectional CF sheets, followed by molding. Of course, a laminate formed by laminating UD materials multidirectionally may be combined with a base material other than a UD material. In the CFRP according to the present invention, the matrix resin is cured.

< Summary of CFRP According to Present Invention >

In the present invention, it is important that the CFRP have an electroconductivity in the thickness direction of 10 S/m or more. This makes it possible to sufficiently increase the electroconductivity between adjacent Layers, and to obtain a sufficient effect of reducing edge glow as will be described later. The electroconductivity in the thickness direction of the CFRP is preferably 15 S/m or more, and more preferably 20 S/m or more.

In the present invention, a region in which the carbon fibers in the carbon fiber sheets have the same angle of fiber orientation consecutively in the thickness direction is referred to as a Layer. It is important that the carbon fiber sheet include at least one "Specific Layer" that simultaneously satisfy the above-described (1) to (3), among the Layers.

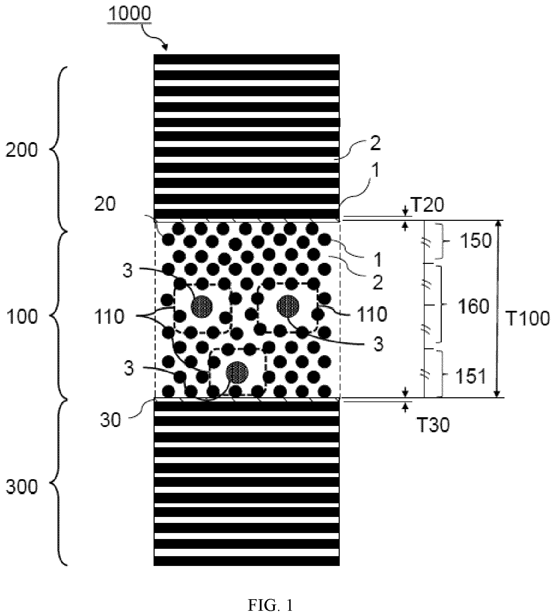

These requirements will be described with reference to the drawings. FIG. 1 shows the outline of one embodiment of the CFRP according to the present invention, and the reference numeral 100 denotes the "Specific Layer". In cases where a resin Layer is present between Layers, the thickness T100 of the Layer 100 is defined as the distance from the central point in the thickness direction of an inter-Layer resin layer 30 on the lower side of the T100, to the central point in the thickness direction of an inter-Layer resin layer 20 on the upper side thereof. In cases where the presence of a resin Layer cannot be confirmed between Layers or the presence of a resin Layer is uncertain, for example, in the case of a CFRP formed by laminating a plurality of prepregs as will be described later, the Z coordinate of the boundary between the Layers is obtained as the Z coordinate of the point having the minimum Vcf value, in the vicinity of the portion between the Layers. The thickness of the "Specific Layer" is preferably 150 $\mu$m or more, because the production of an intermediate base material and the lamination thereof can be performed with a high efficiency. Such an effect is exhibited markedly, particularly in the case of a prepreg. The thickness of the "Specific Layer" is preferably 240 $\mu$m or more, and more preferably 300 $\mu$m or more. Since too large a Layer thickness may cause a decrease in the mechanical properties, the thickness of the "Specific Layer" is preferably 700 $\mu$m or less.

When the mean value of the carbon fiber volume content factor, Vcf, of the "Specific Layer" is 50% or more, the electroconductivity in the thickness direction of the CFRP can be increased. From the same point of view, the mean value of the Vcf is preferably 60% or more. On the other hand, when the mean value of the Vcf is an excessively high, voids may be formed in the CFRP, resulting in a decrease in the mechanical properties. Therefore, the mean value of the Vcf of the "Specific Layer" is preferably 90% or less, and more preferably 80% or less. The mean value of the Vcf of the "Specific Layer" as used here refers to the volume content factor of CFs included in the Layer 100 with respect to the Layer 100, and can be calculated by the method to be described later.

Further, it is important, in the present invention, that a low Vcf domain(s) is/are included in the surface layer(s) and in the inner layer of the "Specific Layer". The term "domain" as used herein refers to a region having a certain size, and the expression that "a low Vcf domain(s) is/are present" means that a region(s) having a Vcf smaller than other locations in the Layer 100 is/are present. As described above, a region having a Vcf of 0.5 or less (hereinafter, sometimes referred to as "having a Vcf ratio of 0.5 or less" in short), when the mean value of the Vcf of the "Specific Layer" is defined as 1, is defined as the low Vcf domain. Specifically, the low Vcf domains can be identified by the measurement method to be described in the section of "Identification of Low Vcf Domains" below. Low Vcf domains 110 may be connected to each other, or may each be independent. The definition of the low Vcf domain will be described later. Further, the surface layers and the inner layer of the "Specific Layer" are defined as follows: when the "Specific Layer" is divided in the thickness direction into four sections having equal thicknesses, as will be described later, two sections on the surface sides are each defined as the surface layer, and two sections in the inner portion are collectively defined as the inner layer. When low Vcf domains are formed within the "Specific Layer" without decreasing the volume of the CFs, the low Vcf domains function as if they are stuffing, and high Vcf domains are locally formed due to volume exclusion effect, making it possible to improve the electroconductivity in the thickness direction of the CFRP. In particular, the presence of the high Vcf domains in the surface layer of the Specific Layer increases the chance of contact between the CFs in the Specific Layer and those in an adjacent Layer, and this allows for increasing the electroconductivity between adjacent Layers, and effectively reducing edge glow. On the other hand, increasing the amount of low Vcf domains in the inner layer causes the carbon fibers in the entire Layer to be pushed and spread, making it possible to prevent the contact between the carbon fibers in the Layer and those in the adjacent Layer from being localized, and to decrease the variation in the electroconductivity.

Therefore, the area ratio of the area of the low Vcf domain(s) present in the surface layer(s) and the area of the low Vcf domain(s) present in the inner layer, in a cross section of the "Specific Layer", is preferably within the range of from 90: 10 to 10:90. The area ratio is more preferably within the range of from 80:20 to 20:80, and still more preferably from 70:30 to 30:70. The area ratio may be within the range of any combination of the upper limit values and the lower limit values described above.

In addition, it is important that at least one low Vcf domain contain a particle(s). This enables stable low Vcf domain formation. When electroconductive particles are used as the particles to be contained, the electroconductivity is further improved, and the risk of edge glow can be reduced. When polymer particles are used the particles, the toughness of the CFRP can be improved.

< Matrix Resin >

The matrix resin to be used in the CFRP according to the present invention preferably contains a thermosetting resin, a thermoplastic resin and a hardener. However, the matrix resin may contain a thermosetting resin and a hardener, or may contain only a thermoplastic resin. An epoxy resin is commonly used as the thermosetting resin. In particular, an epoxy resin whose precursor is an amine, a phenol, or a compound having a carbon-carbon double bond is preferred. Specific examples of such resins include, but are not limited to: epoxy resins whose precursors are amines, such as various isomers of tetraglycidyldiaminodiphenylmethane, triglycidyl-*p*-aminophenol, triglycidyl-*m*-aminophenol and triglycidylaminocresol; epoxy resins whose precursors are phenols, such as bisphenol A epoxy resins, bisphenol F epoxy resins, bisphenol S epoxy resins, phenol novolac epoxy resins and cresol novolac epoxy resins; and epoxy resins whose precursors are compounds having a carbon-carbon double bond, such as alicyclic epoxy resins. While it is effective to decrease cross-linking density in order to improve the tensile strength of the CFRP, such a decrease causes a decrease in the heat resistance and the elastic modulus. To solve the above-mentioned problem, it is also preferred to use a dicyclopentadiene epoxy resin having a rigid skeleton, or a glycidyl aniline-type epoxy resin which is a pendant-type epoxy resin. In addition, a brominated epoxy resin obtained by the bromination of such a resin is also used. An epoxy resin whose precursor is an aromatic amine typified by tetraglycidyl diaminodiphenylmethane is suitable for the present invention, because the epoxy resin has a good heat resistance and a good adhesion to CFs.

The thermosetting resin is preferably used in combination with a hardener. In the case of an epoxy resin, for example, any compound having an active group capable of reacting with an epoxy group can be used as the hardener. Preferably, a compound having an amino group, an acid anhydride group or an azido group is suitable as the hardener. Specifically, various isomers of dicyandiamide and diaminodiphenyl sulfone, and aminobenzoic acid esters are suitable. To put it specifically, dicyandiamide is preferably used, because the resulting prepreg has excellent preservation properties. Various isomers of diaminodiphenyl sulfone are most suitable for the present invention, because the compounds give cured products having a good heat resistance. As the aminobenzoic acid esters, trimethylene glycol di-$p$-aminobenzoate and neopentyl glycol di-$p$-aminobenzoate are preferably used. These compounds have excellent tensile strength although being inferior to diaminodiphenyl sulfone in heat resistance, and thus are selected and used depending on the application. Of course, it is possible to use an expensive catalyst, if necessary. In view of improving the pot life of a coating solution, it is also possible to use a complexing agent capable of forming a complex with a hardener or a curing catalyst, in combination.

In the present invention, it is also suitable to use a mixture of a thermosetting resin and a thermoplastic resin as the matrix resin. The use of a mixture of a thermosetting resin and a thermoplastic resin gives a better result than using a thermosetting resin singly. This is because a thermosetting resin and a thermoplastic resin have contradictory properties: that is, a thermoplastic resin generally has a disadvantage of being brittle, but can be molded at a low pressure in an autoclave; whereas a thermoplastic resin generally has an advantage of being tough, but is difficult to be molded at a low pressure in an autoclave. Therefore, the use of a mixture of these resins enables to balance between physical properties and the moldability. In the case of using a mixture of these resins, the mixture preferably contains the thermosetting resin in an amount of more than 50% by mass, from the viewpoint of the mechanical properties of a CFRP obtained by curing prepregs.

As the thermoplastic resin, it is possible to use a polymer having, in the principal chain thereof, a bond selected from the group consisting of a carbon - carbon bond, an amide bond, an imide bond, an ester bond, an ether bond, a carbonate bond, a urethane bond, a urea bond, a thioether bond, a sulfone bond, an imidazole bond and a carbonyl bond. Specific examples thereof include polyacrylate, polyolefin, polyamide (PA), aramid, polyester, polycarbonate (PC), polyphenylenesulfide (PPS), polybenzimidazole (PBI), polyimide (PI), polyetherimide (PEI), polysulfone (PSU), polyethersulfone (PES), polyetherketone (PEK), polyetheretherketone (PEEK), polyetherketoneketone (PEKK), polyaryletherketone (PAEK) and polyamideimide (PAI). In the fields that require heat resistance, such as aircraft applications, PPS, PES, PI, PEI, PSU, PEEK, PEKK, PAEK and the like are suitable. In industrial applications, automotive applications and the like, on the other hand, PA, polyester, PPS, a polyolefin such as polypropylene (PP), and the like are suitable, in order to increase the molding efficiency. These may be polymers. Alternatively, oligomers or monomers may be used for achieving a low viscosity, or to perform low temperature coating. Of course, these may be copolymerized, or various types can be mixed to be used as polymer blends or alloys, depending on the purpose.

< Particles >

The low Vcf domains in the CFRP according to the present invention can contain a particle(s). In the present invention, the term "particle" refers to a particulate solid substance having a minor axis of 1 $\mu$m or more and present in the CFRP. Therefore, the electroconductive aid and the nano filler to be described later do not correspond to the particles as defined in the present invention. Low Vcf domains are formed by actively introducing particles into the carbon fiber sheet along with a resin, and the thus introduced particles and resin push and spread the carbon fiber sheet. This pushing and spreading increases the apparent thickness of the carbon fiber sheet, and substantially causes a decrease in the film thickness of the inter-Layer resin layers, making it possible to form a number of in-plane electroconductive paths relatively uniformly, at the portions (correspond to the inter-Layer resin layers) between the "Specific Layer" and the Layers adjacent to the "Specific Layer". At this time, single fibers in contact with the particles gently curve due to volume exclusion by the particles, and volume spaces larger than those formed by the particles themselves can be effectively formed inside the carbon fiber sheet. The thus formed relatively uniform in-plane electroconductive paths provide the effect of reducing edge glow due to a high electroconductivity in the thickness direction, and enable to obtain a CFRP with a small in-plane variation.

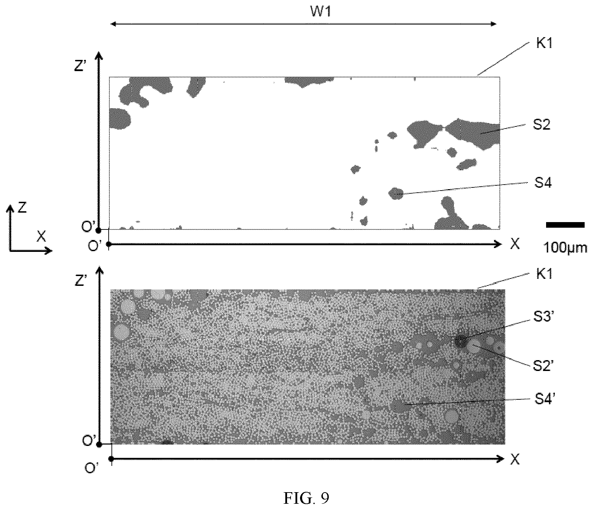

The cross-sectional photograph of the CFRP shown in the lower portion of FIG. 9 is obtained by observing the cross section using a laser microscope (ultra-depth color 3D profile microscope, VK-9510; manufactured by Keyence Corporation) or the like, at a magnification of 200 times or more. In the photograph, there are differences in shade between the circular objects, such as S2' and S3', and the surrounding regions, and the circular objects have a major axis and a minor axis both of which are 1 $\mu$m or more; therefore, these objects can be identified as particles. While there is a portion such as S3' that appears black, as well, this is thought be the mark of a fallen particle appearing black. Upon comparing S2 in the diagram at the upper portion of FIG. 9 with S2' in the diagram at the lower portion of FIG. 9, for example, it can be seen that the low Vcf domain contains the particle. In the present invention, at least one low Vcf domain contains a particle(s), but it is not essential that all of the low Vcf domains contain a particle(s), and a low Vcf domain(s) that do/does not contain any particles may be present. As described above, the spacing between the carbon fibers in the carbon fiber sheet are pushed and spread by the particles introduced along with the resin, and this makes the single carbon fibers in contact with the domain containing a particle(s) to gently curve. Therefore, there are cases where a low Vcf domain in which the presence of any particles is not observed in a cross-sectional image is present, as can be seen from the low Vcf domain S4, and from the domain S4' corresponding to the portion thereof in the cross-sectional image of the CFRP.

The particles to be used in the present invention preferably have a sphericity of 0.9 or more. When the particles have a sphericity of 0.9 or more, it is possible to introduce low Vcf domains and to increase the apparent thickness of the carbon fiber sheet, regardless of the directions of the long axis and the short axis of the particles introduced into the carbon fiber sheet. In cases where a plurality of types of particles are contained, the sphericity is determined without distinguishing the types of the particles. The sphericity as used herein is determined by selecting 30 particles at random from a cross-sectional photograph of the CFRP, and calculating from the minor axes and the major axes thereof, in accordance with the following equation. The cross-sectional photograph of the CFRP to be used at this time need not be the same as the image used for observing the low Vcf domains described above, as long as it can be identified that the particles in the photograph are the same type of particles as those contained in the low Vcf domains.

[Math 1]

$$S = \sum_{i=1}^{n} (b/a)/n \times 100$$

In the above equation, S represents the sphericity, a represents the major axis, b represents the minor axis, and n represents the number of particles observed.

The particles to be used in the present invention preferably have a median diameter Dm of 6 μm or more. When the particles have a median diameter of 6 μm or more, it is possible to introduce low Vcf domains and to increase the apparent thickness of the carbon fiber sheet. The Dm of the particles is preferably 10 μm or more, and more preferably 15 μm or more. In cases where a plurality of types of particles are contained, the median diameter is determined without distinguishing the types of the particles. The median diameter Dm of the particles as used herein is determined as follows. Thirty particles are selected at random from a cross-sectional photograph of the CFRP, and the arithmetic mean value of the minor axis b and the major axis a of each particle is taken as the diameter D of the particle. When all the values of the particle size D are arranged in the order of magnitude, the value in the middle is referred to as the median diameter. Specifically, when the 30 values that are arranged in the order of magnitude are indicated as D1 < D2<...... < D30, the value of (D15 + D16)/2 is defined as the median diameter. The cross-sectional photograph of the CFRP to be used at this time need not be the image used for observing the low Vcf domains described above.

In the particles to be used in the present invention, the proportion of particles having a diameter of 50 μm or more is preferably 10% or less, when the total number of the particles is taken as 100%. This makes it possible to prevent the particles from being filtered when the particles are introduced into the carbon fiber sheet, and to efficiently introduce the particles into the carbon fiber sheet, giving an advantage in the formation of the low Vcf domains. The proportion of particles having a diameter of 50 μm or more is preferably 5% or less, and more preferably 2% or less. In cases where a plurality of types of particles are contained, the proportion of particles having a diameter of 50 μm or more is determined without distinguishing the types of the particles. The cross-sectional photograph of the CFRP to be used at this time need not be the image used for observing the low Vcf domains described above.

At least one type of the particles to be used in the present invention is preferably electroconductive particles. When the particles are electroconductive particles, the portions where the particles are in contact with fibers serve as electroconductive paths, making it possible to ensure the electroconductivity of the carbon fiber sheet itself while increasing the apparent thickness of the carbon fiber sheet. In addition, since the electroconductive particles remaining in the surface layers serve as electroconductive paths to adjacent layers, it is possible to effectively improve the electroconductivity of the entire CFRP. It is possible to use, as the electroconductive particles to be used in the present invention, metal particles, metal oxide particles, inorganic particles or organic polymer particles subjected to metal coating, carbon particles or the like. Of these, carbon particles are preferred, because they do not cause corrosion problems even when used in an aircraft. Further, the use of carbon particles having a (002) interplanar spacing of from 3.4 to 3.7 Angstroms facilitates improving the electroconductivity, and thus is preferred. For example, Carbon, No. 168, 157-163 (1995) discloses, as an example of carbon particles, that ICB manufactured by Nippon Carbon Co., Ltd. has a (002) interplanar spacing of 3.53 Angstroms, and is substantially spherical carbon particles. In addition, it is also disclosed therein that the spherical carbon particles are very hard, and difficult to deform even when a compression deformation is applied thereto, and further that the particles restore the original shape when the compression is removed. In the case of using an FRP as an aircraft structural material, a deformation is applied to the structural material, as is typified by the bending of the main wing during flying. However, an FRP containing spherical carbon particles is expected to achieve a stable electroconductivity, since the spherical carbon particles are less prone to have an irreversible deformation.

Further, the CFRP preferably contains an electroconductive filler or short fibers, or an electroconductive nanomaterial, as an electroconductive aid. The "electroconductive aid" as used herein refers to an electroconductive substance whose particles have a minor axis of less than 1 $\mu$m. In particular, a nano filler composed of a carbon material is incorporated as the electroconductive aid in order to increase the electroconductivity of the CFRP to be obtained in the present invention. The nano filler composed of a carbon material is not particularly limited, and examples thereof include carbon nanofibers, carbon nanohorns, carbon nanocoms, carbon nanotubes, carbon nanocoils, carbon microcoils, carbon nanowalls, carbon nanochaplets, fullerene, carbon black, graphite, graphene and carbon nanoflakes, and derivatives thereof. The nano fillers composed of these carbon materials may be used singly, or in combination of two or more types thereof. Of the nano fillers composed of carbon materials, carbon black which can be obtained at a low cost and which has a high effect of imparting electroconductivity is preferred, from the comprehensive perspective including the supply and cost, the effect of imparting electroconductivity and the like. Carbon black is generally carbon-based fine particles which is produced such that the number average particle size in the state of primary particles is controlled to from 3 to 500 nm. Examples of such carbon black include furnace black, hollow furnace black, acetylene black and channel black.

In the CFRP according to the present invention, at least one type of the particles is preferably polymer particles. Incorporation of polymer particles makes it possible to form the low Vcf domains while reducing the amount of expensive electroconductive particles used. Polyamide particles, polyimide particles or the like can be preferably used as the polymer particles, but polyamide particles are more preferred in view of the cost. In cases where a high heat resistance is required, it is preferred to use polyimide particles. Examples of the polyamide that can be suitably used include nylon 12, nylon 11, nylon 6, nylon 66, a nylon 6/12 copolymer, and a nylon (a semi-IPN nylon) converted into a semi-IPN (macromolecular interpenetrating network structure) by the epoxy compound described in Example 1 in JP 01-104624 A.

< Arrangement of Particles >

In the CFRP according to the present invention, when the median diameter of particles included in the "Specific Layer" is defined as Dm, the average number of particles present within a distance of 2 Dm from the center of each particle in the "Specific Layer" is 3.5 or less. In the present invention, particles are introduced into the interior of the carbon fiber sheet along with the resin, and effectively increases the apparent thickness of the carbon fiber sheet, as described above. When the average number of particles present within a distance of 2 Dm is 3.5 or less, the respective particles are uniformly dispersed in the FRP, making it possible to effectively increase the apparent thickness of the carbon fiber sheet. The average number of particles is preferably 2.5 or less. In cases where a plurality of types of particles are contained, the average number of particles present within a distance of 2 Dm from the center of each particle is determined without distinguishing the types of the particles. The definition of the particles does not include the electroconductive aid or the nano filler described above, and the particles refer to those having a minor axis of 1 $\mu$m or more. The means for controlling the average number of particles present within a distance of 2 Dm from the center of each particle in the Specific Layer, when the median diameter of the particles is defined as Dm, to 3.5 or less, is not particularly limited. The control can be achieved by adjusting the diameter or the distribution of the particles to be used, or by controlling the conditions at the time of introducing the particles into the carbon fiber sheet along with the resin, which will be described later. The average number of particles present within a distance of 2 Dm from the center of each particle in the Specific Layer is determined by: selecting 30 particles at random from a cross-sectional photograph of the CFRP; counting the number of particles present within a distance of 2 Dm from the center of each particle; and calculating the average of the counted numbers, for the 30 particles selected at random. The cross-sectional photograph of the CFRP to be used at this time need not be the image used for observing the low Vcf domains described above.

In the present invention, when the median diameter of particles included in the "Specific Layer" is defined as Dm, the average distance from the center of each particle to the center of another particle closest to the particle, in the "Specific Layer", is preferably 1.2 Dm or more, and more preferably 1.5 Dm or more. In cases where a plurality of types of particles are contained, the average distance is determined without distinguishing the types of the particles. This allows the respective particles to exist apart from each other, making it possible to efficiently form the low Vcf domains. The method of controlling the average distance from the center of each particle to the center of another particle closest to the particle, in the Specific Layer, to 1.2 Dm or more, is not particularly limited. The control can be achieved by adjusting the diameter or the distribution of the particles to be used, or by controlling the conditions at the time of introducing the particles into the carbon fiber sheet along with the resin, which will be described later. The average distance from the center of each particle to the center of another particle closest to the particle, in the Specific Layer, is determined by: selecting 30 particles at random from a cross-sectional photograph of the CFRP; measuring the distance from the center of each particle to the center of another particle closest to the particle, on the cross-sectional photograph; and calculating the average of the measured distances, for the 30 particles selected at random. The cross-sectional photograph of the CFRP to be used at this time need not be the image used for observing the low Vcf domains described above.

< Contact with Carbon fibers Included in Adjacent Layer >

In the CFRP according to the present invention, five or more carbon fibers included in the "Specific Layer" are preferably in contact with carbon fibers included in at least one Layer, of Layers adjacent to the "Specific Layer", per 2 mm in the plane direction of the Specific Layer. The number of the carbon fibers included in the Specific Layer in contact with carbon fibers included in the adjacent Layer is more preferably 20 or more, and still more preferably 40 or more. The larger the above-described number of the carbon fibers in contact, the easier the electroconductive paths will be formed, and thus is preferred. In view of the diameter of the carbon fibers and the like, however, the number of the carbon fibers in contact is preferably 300 or less. The method of identifying the carbon fibers in contact with carbon fibers included in an adjacent Layer will be described later. By this arrangement, electroconductive paths to an adjacent Layer are formed, making it possible to effectively reduce edge glow. In addition, it is important that at least one or more carbon fibers included in the Specific Layer be in contact with an adjacent Layer, per 0.4 mm in the plane direction of the "Specific Layer". The expression "at least one or more carbon fibers included in the Specific Layer are in contact with an adjacent Layer" means that, when a region of 0.4 mm in the Layer plane direction is observed, one or more carbon fibers included in the Specific Layer are always in contact with the carbon fibers included in an adjacent Layer. For example, the above expression means that, in cases where a region of 2 mm in the Layer plane direction is observed, and when the 2 mm-region is divided into five regions at 0.4 mm intervals, at least one or more carbon fibers in the Specific Layer are in contact with the carbon fibers in an adjacent Layer, in all of the five regions. When at least one carbon fiber is in contact with carbon fibers in an adjacent Layer at every 0.4 mm interval, it is possible to equally form electroconductive paths in the in-plane of the CFRP, and to reduce the variation in the electroconductivity in the in-plane of PPg. The above-described number of the carbon fibers in contact is preferably at least three or more per 0.4 mm in the Layer plane direction, and more preferably at least five or more per 0.4 mm in the Layer plane direction. When at least one carbon fiber is in contact with carbon fibers in an adjacent Layer at every 0.4 mm interval, it is possible to equally form electroconductive paths in the in-plane of the CFRP, and to reduce the variation in the electroconductivity.

< Detailed Description of CFRP According to Present Invention >

The details of the CFRP according to the present invention will be described more specifically, with reference to examples.

< Outline of One Embodiment of Present Invention >

The present invention is not limited to the present embodiment. In the present invention, a region including a region in which the CFs in the CF sheets have the same angle of fiber orientation consecutively in the thickness direction is defined as a Layer, and this definition is not limited to the present embodiment. The specific meaning thereof is as described above. A region in which no fiber is present may exist in the Layer, as the "low Vcf domain" to be described later.
In the CFRP according to the present invention, the CF sheets including unidirectionally arranged CFs are laminated multidirectionally, and thus, the CFRP inevitably includes a plurality of Layers.
In the present invention, at least one Layer (Specific Layer) that simultaneously satisfies the above-described requirements (1) to (3) is included. A Layer that does not satisfy the requirements of the "Specific Layer" is sometimes referred to as "ordinary Layer". In FIG. 1, the Layer 100 is the "Specific Layer", and a detailed description will be given below taking FIG. 1 as an example. In a CFRP 1000, a Layer 200 and a Layer 300 (hereinafter, each sometimes referred to as "adjacent Layer") having an angle of fiber orientation different from that of the Layer 100 are present adjacent to the Layer 100 on the upper side and the lower side thereof, respectively.
The inter-Layer resin layers 20 and 30 are present between the Layer 100 and the Layer 200, and between the Layer 100 and the Layer 300, respectively. The thicknesses of the inter-Layer resin layers 20 and 30 are defined as T20 and T30 respectively. However, in another embodiment of the present invention, the inter-Layer resin layers 20 and 30 need not be present. The definition of the inter-Layer resin layers 20 and 30 will be described later. In the Layer 100, "low Vcf domains 110" (each indicated by surrounding with a rectangle) in which the ratio with respect to the mean value of the Vcf of the entire Layer 100 is less than 0.5, are present.

The Layer 100 can be divided into four sections equally in the thickness direction, and divided into an inner layer 160 (corresponds to two sections) and surface layers 150 and 151.

Further, in the present invention, the area ratio of the low Vcf domain(s) present in the surface layer(s) and the low Vcf domain(s) present in the inner layer, in a cross section of the "Specific Layer", is preferably from 90:10 to 10:90 (such a limitation is hereinafter sometimes referred to as "requirement (4)"). As described in the requirement (4), the area ratio of the low Vcf domain(s) present in the surface layer(s) and the low Vcf domain(s) present in the inner layer, in a cross section of the "Specific Layer", is preferably within the range of from 90:10 to 10:90. The "area" as used here refers to the area of the portion surrounded by a rectangle of each low Vcf domain 110. In FIG. 1, the low Vcf domains are indicated by surrounding with rectangles, as models, and the method of identifying low Vcf domains will be described later. Taking FIG. 1 as an example, there are two Vcf domains 110 in the inner layer 160 and one Vcf domain 110 in the surface layer 151, and therefore, the area ratio of the low Vcf domain present in the surface layer of the "Specific Layer" and the Vcf domains present in the inner layer thereof is 33:67, assuming that the three low Vcf domains 110 each have the same area. In order to reduce edge glow, it is important to reduce the electric potential difference between adjacent Layers, as described above, and in particular, it is important to increase the contact between the CFs in the "Specific Layer" and those in an adjacent Layer. By increasing the contact between the CFs in the "Specific Layer" and those in an adjacent Layer, electroconductive paths to the adjacent Layer are formed, making it possible to decrease the electric potential difference between the "Specific Layer" and the adjacent Layer. When the area ratio of the low Vcf domain present in the surface layer of the "Specific Layer" and the Vcf domains present in the inner layer thereof is adjusted to the range described above, the fibers in the Layer 100 are pushed and spread centering around the low Vcf domains, and the low Vcf domains efficiently exclude the volume in the Layer 100. This makes it possible to increase the thickness of the entire Layer 100, and a larger number of CFs in the "Specific Layer" can be brought into contact with the CFs in the adjacent Layer. In particular, increasing the amount of low Vcf domains in the inner layer causes the carbon fibers in the entire Layer to be pushed and spread, making it possible to prevent the contact between the carbon fibers in the Specific Layer and those in the adjacent Layer from being localized, and to decrease the variation in the electroconductivity. On the other hand, an attempt to form a larger amount of low Vcf domains in the inner layer may cause a decrease in the production efficiency, or an increase in the load on equipment. Therefore, the area ratio is preferably from 80:20 to 20:80, and more preferably from 70:30 to 30:70. A CFRP in this form can be formed by the method to be described later.

Further, the low Vcf domains may contain particles. Containing particles makes it possible to efficiently increase the thickness of the entire Layer 100, and a larger number of CFs in the Specific Layer can be brought into contact with the CFs in the adjacent Layer. This effect will be described later again.

That is, a Layer that satisfies the requirements (1) to (3) as does the Layer 100 is referred to as "Specific Layer" in the present invention. As shown in FIG. 1, the Layers 200 and 300 are shown as ordinary Layers, differing from the Layer 100, but may each be the "Specific Layer".

To improve the electroconductivity in the thickness direction of the CFRP, it is effective to improve the Vcf. However, in general, an increase in the mean value of the Vcf of a Layer results in a decrease in the amount of the matrix resin in the Layer, and thus, there are cases where the impregnation of the matrix resin into the CF sheets may be insufficient, making voids more likely to be formed in the CFRP. In the present invention, on the other hand, low Vcf domains 110 push and spread the carbon fiber sheet from the interior thereof, in the Layer 100 which is the "Specific Layer", and this allows for increasing the substantial Vcf even in cases where the mean value of the Vcf is maintained constant. That is, it is possible to reduce the formation of voids in the CFRP, which is a problem associated with an increase in the mean value of the Vcf of the Layer 100, and at the same time, to obtain a high electroconductivity, which is the effect of a high Vcf. To put it more specifically, if the portion excluding the low Vcf domains 110 from the Layer 100 has a high Vcf, the CFs in the Layer 100 are more easily brought into contact with the CFs in the adjacent Layer, as described above, enabling to greatly improve the electroconductivity between Layers.

To locally increase the above-described Vcf in the vicinity of the boundary with the adjacent Layer without causing an excessive increase in the mean value of the Vcf of the Layer, it is preferred that the low Vcf domain(s) be present in the Specific Layer at a proportion of 1% or more and 50% or less, when the cross-sectional area of a cross section in an out-of-plane direction of the entire "Specific Layer" is taken as 100%. The area proportion of the low Vcf domain(s) in the Specific Layer is more preferably 2% or more and 50% or less. The area proportion is still more preferably 3% or more and 50% or less.

< Details of One embodiment of Present Invention >

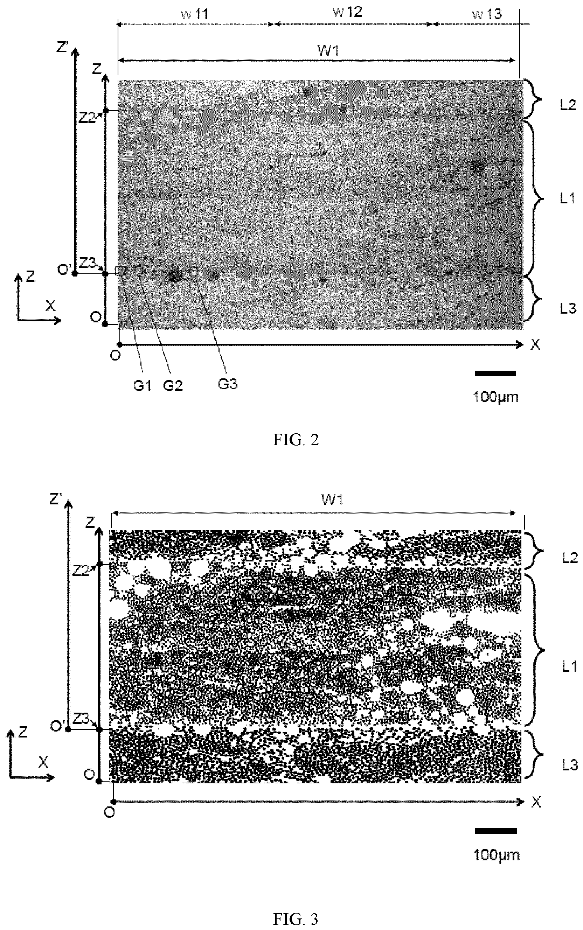

The CFRP according to the present invention will be described in further detail, with reference to FIG. 2.

< Method of Identifying Layers >

FIG. 2 is one example of a cross-sectional photograph of the CFRP according to the present invention, and shows a Layer L1, which is the "Specific Layer", and portions of ordinary Layers L2 and L3. The Layers L2 and L3 have an angle of fiber orientation of the CFs different from that of the Layer L1. As described above, the CFs in a Layer have the same orientation angle, in the present invention. However, this permits a disorder at a level caused by the flow of CFs due to the effect during molding. In the present invention, it is possible to determine which Layer each CF belongs to, by the difference in the cross-sectional shape of the CFs. In general, the cross-sectional shape of a CF is observed in the form of an ellipse. A region in which the ellipses have roughly the same length in the long axis and are present consecutively in the thickness direction, is determined to be one Layer. Further, if it is understood that CFs in a region in which the CFs are present consecutively in the thickness direction have the same orientation angle, at a stage where prepregs have been laminated, the region may be determined as one Layer. In Fig. 2, the rightward direction on the page is defined as the positive X-axis direction, the upward direction on the page is defined as the positive Z-axis direction, and the origin O of the Z axis is set at the lower end of the cross-sectional photograph.

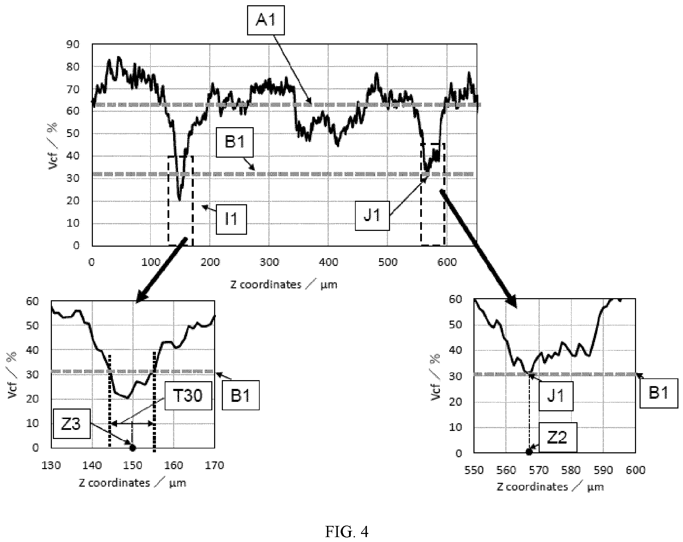

In the present invention, the boundaries between the "Specific Layer" L1 and the adjacent Layers L2 and L3 are determined from the distribution in the Z-axis direction of the Vcf. The distribution in the Z-axis direction of the Vcf can be determined as follows. First, a cross-sectional photograph (FIG. 2 is taken as an example) is binarized (FIG. 3) by separating the image with a threshold value that enables to distinguish CFs (black) from the matrix resin (white), using image analysis software. At this time, the image shown in FIG. 2 needs to have a resolution in which the length of one side of one pixel is 0.3 $\mu$m or less, and to have a range of 1,000 $\mu$m or more in the X-axis direction. ImageJ (developed by Wayne Rasband, National Institutes of Health) or the like, for example, can be used as the image analysis software. The Vcf can be calculated from the area proportion of the black portions indicating CFs. A rectangular region having a length (0.2 $\mu$m in this case) corresponding to one pixel in the Z-axis direction and having a length (W1) (1,000 $\mu$m in this case) of the entire X axis in the image in the X-axis direction, is taken as the evaluation region, to calculate the Vcf. The distribution in the Z-axis direction of the Vcf can be obtained, by calculating the Vcf of the above-described evaluation region at every 0.2 $\mu$m interval, which corresponds to the length of one pixel, from the origin of the Z axis toward the Z-axis direction. The distribution in the Z-axis direction of the Vcf obtained from the FIG. 3 is shown in FIG. 4 (the origin is indicated as O).

Next, in order to extract the "Specific Layer" L1 alone, the Z coordinates (Z2 and Z3 in FIG. 3) of the boundaries with the adjacent Layers are determined. First, the median value of the Vcf is calculated from the distribution in the Z-axis direction of the Vcf, shown in FIG. 4. The median value of the Vf as used herein refers to the value in the middle, when all the values of Vf are arranged in the order of magnitude. Specifically, when the values in the number of N that are arranged in the order of magnitude are indicated as $x(1) < x(2) < ...... < x(N)$, the value $x(m)$, wherein $x(m) = x((N + 1) / 2)$ is defined as the median value of the Vf, in cases where N is an odd number; whereas the value $(x(m) + x(m + 1)) / 2$, wherein $m = N / 2$, is defined as the median value of the Vf, in cases where N is an even number. This value corresponds to A1 in FIG. 4, and is taken as the representative value of the Vcfs including those of the "Specific Layer" L1, the Layer L2 and the Layer L3 that are included in the cross-sectional photograph. The reason for using the median value, not the arithmetic mean value, as the representative value of the Vcfs here, is because it is thought that the Vcf is more likely to vary depending on the range of the observation region in the Z-axis direction of the cross-sectional photograph, if the arithmetic mean value is used. The median value (A1 in FIG. 4) of the Vcf multiplied by 0.5 is taken as the threshold value for defining an inter-Layer resin layer present between the Specific Layer and the adjacent Layer. This threshold value corresponds to B1 in FIG. 4. In the vicinity of the boundary with the adjacent Layer, the portion having a Vcf of equal to or lower than the threshold value B1 is defined as an inter-Layer resin layer. In the graph shown in the upper portion of FIG. 4, only the portion indicated as I1 corresponds to the above definition, and I1 is regarded as the inter-Layer resin layer between the Layers L1 and L3. The thickness of the inter-Layer resin layer is defined as the Z-coordinate length of the portion corresponding to the inter-Layer resin layer. In the graph shown in the lower left of FIG. 4, T30 corresponds to the thickness of the inter-Layer resin layer. The Z coordinate of the boundary with the adjacent Layer is defined as the median value of the Z coordinates of the portion corresponding to the inter-Layer resin layer.

In FIG. 4, Z3 corresponds to the Z coordinate of the boundary between the Layers L1 and L3. On the other hand, a portion having a Vcf of equal to or lower than the threshold value B 1 is absent in the vicinity of the boundary between the Layers L1 and L2. Therefore, it is regarded that no inter-Layer resin layer is present, and thus the thickness thereof is 0. In this case, the Z coordinate of the boundary with the adjacent Layer is defined as the Z coordinate of the point having the minimum Vcf value in the vicinity of the boundary with the adjacent Layer. In the graph shown in the lower right of FIG. 4, Z2 corresponds to the Z coordinate of the boundary between the Layers L1 and L2, and this is the Z coordinate of the point J1 having the minimum Vcf value in the vicinity of the boundary between the Layers L1 and L2. The region of the "Specific Layer" L1 in the Z-axis direction is within the range of from Z3 to Z2, which are the Z coordinates of the boundaries with the adjacent Layers.

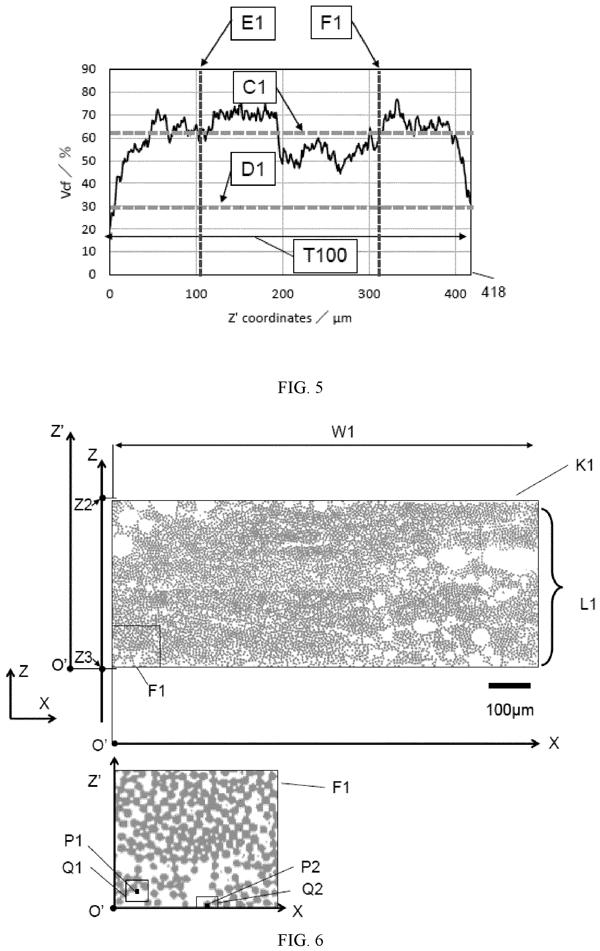

Next, focusing only on the "Specific Layer" L1, Z' axis whose origin O' is Z3 and which is parallel to the Z axis is newly defined, as shown in FIG. 3. FIG. 5 shows the distribution in the Z' direction of the Vcf, in the "Specific Layer" L1. The thickness T100 of the "Specific Layer" L1 is a value obtained by subtracting Z3 from Z2, which is defined as the maximum value of the Z' coordinate. The mean value of the Vcf of the Layer L1 is defined by the mean value of the distribution in the Z' direction of the Vcf. This value corresponds to C1 in FIG. 5. A value obtained by multiplying C1 by 0.5 is taken as the threshold value for defining the low Vcf domain. Further, the thickness E1 that corresponds to the 1/4 point of the entire thickness, and the thickness F1 that corresponds to the 3/4 point thereof, are each defined as the thickness for distinguishing the inner layer and each surface layer. That is, in the case of FIG. 5, the region (the range of from E1 to F1 in FIG. 5) of from 105 $\mu$m (rounded up to the nearest whole number) which corresponds to the 1/4 point with respect to the entire thickness, 418 $\mu$m, to 314 $\mu$m which corresponds to the 3/4 point with respect thereto, is the inner layer, and the regions other than that are the surface layers.

< Identification of Low Vcf Domains >

The method of identifying the low Vcf domains will be described, using FIG. 3 as an example. The sizes and the existing positions of the low Vcf domains are identified by the distribution of the Vcf in the "Specific Layer". In the present invention, the distribution of the Vcf in the Layer is determined from a cross-sectional image in the thickness direction of the Vcf. The distribution of the Vcf can be determined as follows.

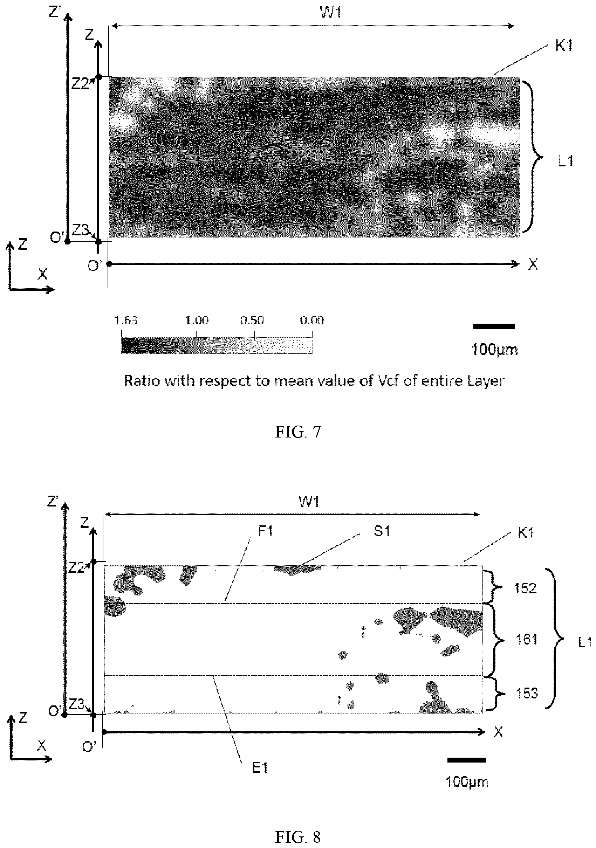

First, the CFs (black) are distinguished from the matrix resin (white). At this time, the distinguishing is performed using a cross-sectional image having a resolution in which the length of one side of one pixel is 0.3 $\mu$m or less, having a range of 1,000 $\mu$m or more in the X-axis direction, and having a range of from Z2 to Z3, derived from the above-described Layer thickness analysis, in the thickness direction. This range is hereinafter referred to as the analysis range. ImageJ (developed by Wayne Rasband, National Institutes of Health) or the like, for example, can be used as the image analysis software. Next, the Vcf distribution in the analysis range is derived. FIG. 6 is shown as an example. In the enlarged view F1 of an arbitrary location within the analysis range K1, the Vcf of an arbitrary pixel P1 is calculated from the area proportion of the black portions indicating CFs, for Q1 in a range of 20 $\mu$m (rounded up to the nearest whole number) in the X-axis direction and 20 $\mu$m (rounded up to the nearest whole number) in the Z-axis direction, centering around the arbitrary pixel P1. Microsoft Excel 2016 or the like, for example, can be used as the calculation software. Subsequently, the arbitrary pixel P1 is shifted by one pixel, sequentially, and the above calculation is performed for the entire analysis range K1. At this time, in the case of an arbitrary pixel P2 present in the vicinity of the boundary of the analysis range K1, for example, and when a part of a range of 20 $\mu$m (rounded up to the nearest whole number) in the X-axis direction and 20 $\mu$m (rounded up to the nearest whole number) in the Z-axis direction, centering around the arbitrary pixel P2 falls outside the analysis range K1, the region (Q2) of the above-described range included the analysis range K1 can be calculated. The result obtained by deriving the Vcf for the entire analysis range K1 in FIG. 6 is shown in FIG. 7. The region including pixels (hereinafter, each referred to as "low Vcf pixel) having a Vcf ratio of 0.5 or less, when the mean value of the Vcf of the entire Layer is defined as 1, in the thus obtained analysis result, is shown in FIG. 8. As S1 in FIG. 8, a location where a portion (low Vcf pixel) having a Vcf ratio of 0.5 times or less is present singly or consecutively is defined as one low Vcf domain. The expression "to be present consecutively" as used herein means that at least one of 8 pixels adjacent to an arbitrary pixel having a low Vcf, is a low Vcf pixel.

The area proportion of the low Vcf domains in the "Specific Layer", when the cross-sectional area of a cross section in an out-of-plane direction of the entire "Specific Layer" is taken as 100%, refers to a value obtained by dividing the total sum of the areas of the low Vcf domains, by the area of the analysis range K1, which is the area of the entire "Specific Layer". The "cross section in an out-of-plane direction" refers, for example, to the XZ plane in FIG. 8, and is a cross section cut out in a plane including the direction orthogonal to the direction in which the CFs are orientated, and the thickness direction. Further, the Layer 100 is divided into four sections in the thickness direction, and separated into the inner layer 161 and the surface layers 152 and 153, as described above. The area ratio of the low Vcf domains present in the surface layers of the Specific Layer and the Vcf domains present in the inner layer thereof refers to a ratio calculated as follows. When the total number of cells having a Vcf ratio of 0.5 times or less, included in regions which have a range of W1 in the X-axis direction and which are within both the surface layers 152 and 153 in the Z-axis direction, taking F1 and E1 determined in FIG. 5 as the boundaries, is defined as S; and when the total number of cells having a Vcf ratio of 0.5 times or less, included in a region which has a range of W1 in the X-axis direction, and which is within the inner layer 161 in the Z-axis direction, taking F1 and E1 as the boundaries, is defined as I, the area ratio is a ratio calculated by S/I.

< Number of Carbon Fibers in Contact with Adjacent Layer >

Using FIG. 2 described above as an example, carbon fibers that are in contact with an adjacent Layer will be described. The number of carbon fibers in contact with an adjacent Layer can be determined from a cross-sectional photograph of the CFRP. At this time, the image needs to have a resolution in which the length of one side of one pixel is 0.3 µm or less, and to have a range of 2,000 µm or more in the X-axis direction, in order to obtain a sufficient observation distance for determining the variation in the number of carbon fibers that are in contact with the adjacent Layer, to be described later, as well. The "Layer plane direction" as used here is, for example, the X-axis direction in FIG. 2. This means that the "Layer plane direction" refers to the X-axis direction, when X, Y and Z axes are taken as shown in FIG. 2, in a CFRP cross section, and the CFRP cross section is observed such that the carbon fibers in the "Specific Layer" are oriented in the Y-axis direction (depth direction of the page). Further, it is possible to determine which Layer each carbon fiber belongs to, by the difference in the cross-sectional shape of the carbon fibers in the cross section of the CFRP, as described above. Examples of the carbon fibers that are in contact with an adjacent Layer, G1, G2 and G3, are shown in FIG. 2. Whether or not a carbon fiber is in contact with an adjacent Layer is determined as follows. If the distance between the centers of gravity in carbon fiber cross sections, of a certain carbon fiber and another carbon fiber in the adjacent Layer, is less than three times the average diameter of the carbon fibers, the carbon fibers are determined to be in contact with each other. In the case of G1, which is an example of a carbon fiber that is in contact with an adjacent Layer, the distance between the centers of gravity of one pair of carbon fibers is less than three times the average diameter of the carbon fibers, and thus, it is determined that one carbon fiber is in contact with the adjacent Layer. In the case of G2 or G3, which is an example of a carbon fiber that is in contact with an adjacent Layer, as well, the distance between the centers of gravity of one pair of carbon fibers is less than three times the average diameter of the carbon fibers, and thus, it is determined that one carbon fiber is in contact with the adjacent Layer, in each case. The number of carbon fibers included in the Specific Layer" that are in contact with carbon fibers included in a Layer which is adjacent to the Specific Layer on at least one side thereof and which has an angle of fiber orientation different therefrom, per 2 mm in the Layer plane direction, is determined by: performing the same operation as in the case of any of the above-described G1 to G3 for 2,000 µm in the X-axis direction, which is the Layer plane direction, between the Specific Layer and the adjacent Layer; and counting the total number thereof.

Further, each of w11 and w12 in FIG. 2 is a section obtained by dividing the "Specific Layer" by 0.4 m. In the case of the section w11 or w12, for example, the number of carbon fibers that are in contact with an adjacent Layer per 0.4 mm in the plane direction of the "Specific Layer" refers to the number of carbon fibers that are in contact with the adjacent Layer in a section corresponding to the width of w11 or w12. In order to determine the variation in the number of carbon fibers that are in contact with the adjacent Layer, observation of this 0.4 mm section needs to be performed for five consecutive sections. The term "consecutive" means, as shown in FIG. 2, that the observation sections are adjacent to each other as in the case of w11, w12, w13 and so on. The expression "one or more carbon fibers are always in contact with an adjacent Layer, when a CFRP cross section is cut out and a region having a width of 0.4 mm is observed" means that, one or more carbon fibers are in contact with the adjacent Layer within the w11 section, one or more carbon fibers are in contact also within the section w12, and the same is observed within a total of five consecutive sections.

< Effect of Reducing Edge Glow by CFRP according to Present Invention >

As the CFRP according to the present invention has been clarified as described above, the effect of reducing edge glow by the CFRP according to the present invention will be described in detail, next.

In the CFRP 1000, the Layer 200 and the Layer 300 having an angle of fiber orientation different from that of the Layer 100 are present adjacent to the Layer 100 on the upper side and the lower side thereof, respectively. A higher electroconductivity between Layers facilitates the inflow and outflow of an electric current between the Layers. In this case, a plurality of Layers can be more easily utilized as electric current paths even when lightning current flows into the CFRP, making it easier to prevent the local concentration of lightning current and to disperse the electric current. If the electric current can be dispersed to a plurality of Layers, it leads to a decrease in the electrical resistance between the inflow portion and the outflow portion of the lightning current, and a decrease in the electric potential difference. A decrease in the electric potential difference between the inflow portion and the outflow portion of the electric current leads to an overall decrease in the electric potential difference that occurs in the CFRP, which in turn results in a decrease in the electric potential difference between adjacent Layers. A decrease in the electric potential difference between adjacent Layers enables to obtain the effect of reducing edge glow. To facilitate a deeper understanding of the electric potential difference between the Layers, the way in which the electric current flows in the CFRP will be described below.

As a representative example of a structure for an aircraft, a multidirectionally laminated CFRP structure will be discussed, into which structure two metal bolts are inserted, as shown in FIG. 3 in the literature by I. Revel *et al.* (Lecture Paper, International Conference on Lightning Protection 2016, 2016). As a situation prone to the occurrence of edge glow, the following situation is considered: lightning strikes one of the bolts to cause lightning current to flow therefrom; the lightning current flows through the CFRP structure; and the lightning current flows out from the other bolt.

The CFRP has a strong anisotropy in the electroconductivity, and thus, the electric current tends to flow mainly in the CF direction alone, in each Layer. In a Layer in which the two bolts are directly connected by CFs, the electric current is concentrated to the CFs connecting between the bolts. Since the electroconductivity in the fiber direction is relatively high, the electrical resistance between the two bolts decreases, and the electric potential difference between the bolts decreases, in this case. In contrast, in a Layer in which the two bolts are not directly connected by CFs, the electric current needs to spread along the CFs connected to the bolts, and then flow in the orthogonal direction within the Layer. Since the electroconductivity in the orthogonal direction is about 1,000 times as small as the electroconductivity in the fiber direction, in general, the electrical resistance between the two bolts increases, and the electric potential difference between the bolts increases, in this case.

In the case of a CFRP including Layers having different angles of fiber orientation, the electric current spreads along the CFs connected to the bolts in each Layer. The electric current that has spread along the CFs can flow in the direction orthogonal to the CFs in each Layer, but can also flow into an adjacent Layer having a different angle of fiber orientation, and then flow utilizing the CFs in the adjacent Layer. The electrical resistance between the bolts decreases when the electric current flows over a short distance to an adjacent Layer having a different angle of fiber orientation, and then flows over a long distance in the fiber direction in which the electroconductivity is high, in the adjacent Layer, as compared to the case in which the electric current flows over a long distance in the orthogonal direction in which the electroconductivity is low, in each Layer. Since electric current paths are determined so as to minimize the electrical resistance between the bolts, electric current paths through which the electric current flows back and forth between the Layers are formed in the CFRP including a plurality of Layers having different angles of fiber orientation.

In cases where the electric current flows back and forth between the Layers, the electroconductivity between the Layers determines the electric potential difference between the Layers. In cases where the electroconductivity between the Layers is high, the back-and-forth electric current to and from an adjacent Layer is facilitated, even if the electric potential difference between the adjacent Layers does not increase. In this case, the electrical resistance between the two bolts decreases, and the electric potential difference decreases.

Based on the above, improving the electroconductivity between adjacent Layers, makes it possible, in the case of a CFRP including a plurality of Layers, to reduce an increase in the electric potential difference between the two bolts, and to decrease the voltage to be applied to the CFRP, particularly the electric potential difference between the adjacent Layers, even when a large electric current such as lightning current flows therethrough. This allows for reducing the risk of the occurrence of edge glow.

< Effect of Improving Induction Heating Temperature >

Having a high electroconductivity between adjacent Layers provides a desirable effect, in addition to reducing edge glow. For example, a higher effect can be obtained in induction welding which is used in a CFRP containing a thermoplastic resin as a matrix resin. Induction welding technique has partially been put into practical use for aircraft structures composed of CFRPs. Induction welding is a technique in which the thermoplastic resin included in the CFRP is melted by induction heating, and joined by separately applying a pressure. In induction heating, an alternating current is allowed to flow in a coil provided on the exterior of a CFRP to generate an induction current within the CFRP, and to perform heating by Joule heat generation due to the induction current. In induction welding, it is desired to increase the induction heating temperature with a lower input energy.

Since it is important to improve Joule heat generation due to induction current in order to increase the induction heating temperature, it is effective to increase the amount of induction current generated in the CFRP. The literature by X. Xu et al. (Journal of NDT and E International, Vol. 94, p 79-91, 2018) shows that increasing the electroconductivity between Layers having different angle of fiber orientation increases the amount of induction current generated in a CFRP, by numerical analysis. That is, in the CFRP according to the present invention, a large amount of induction current is generated, the induction heating temperature is more easily increased, and a desirable effect can be obtained in induction welding, as well.

The comparison of the amount of induction current generated in a CFRP can be performed by eddy current flaw detection. In general, the eddy current flaw detection is a test for detecting cracks or the like in a CFRP, through the evaluation of the induction current generated in the CFRP. In the eddy current flaw detection, a coil is provided in the vicinity of a CFRP, and the magnetic field generated due to the induction current is evaluated by the change in the impedance of the coil. According to the literature by K. Mizukami et al. (Journal of Polymer Testing, Vol. 69, p. 320-324, 2018), the magnetic field generated due to the induction current is evaluated by the change in the series resistance component of the coil. The literature shows that a larger change in the magnetic field, that is, , a larger amount of induction current leads to an increase in the series resistance component of the coil.

< Another Example of Embodiment of Present Invention >

In the present invention, a Layer that satisfies the requirements as the "Specific Layer" is preferably arranged within two Layers when the number of the Layers is counted from the upper surface or the lower surface of the CFRP, that is, , arranged as the outermost Layer of the CFRP, or as a Layer on the inner side thereof. In the induction welding, for example, this makes is possible to intensively increase the induction current in the vicinity of the CFRP surface as the surface to be welded, and to efficiently perform heating. In the CFRP 1000 shown in FIG. 1, which has such an embodiment, the "Specific Layer" 100 is arranged as the second Layer when the number of Layers is counted from the upper surface of the CFRP 1000. Therefore, in cases where the upper surface is the surface to be welded, the vicinity of the upper surface can be efficiently induction-heated. The Layers other than the "Specific Layer" 100 may be those satisfying the requirements of the "Specific Layer", or may be ordinary Layers.

Further, an embodiment in which two or more of "Specific Layer" are laminated consecutively is preferred. Between the two or more of "Specific Layer", the electroconductivity of the portion(s) where these Layers adjoin one another is greatly improved, further increasing the effect of reducing edge glow or improving the induction heating temperature. Only from the viewpoints of reducing edge glow and improving the induction heating temperature, it is also preferred that all of the Layers be the "Specific Layer".

< Examples of Forms of Prior Art >

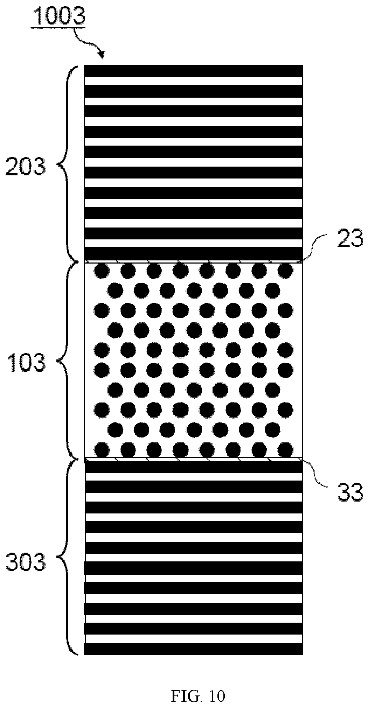

FIG. 10 is a cross-sectional view showing one form of a conventional ordinary (non-interlayer-reinforced) CFRP. In the CFRP shown in FIG. 10, the Vcf is substantially uniform in the Layers having the same angle of fiber orientation, regardless of the location, and the CFRP does not have a structure in which a low Vcf domain(s) is/are present in a Layer. If the total thickness of the Layers and the mean value of the Vcf of the Layers are the same, the contact frequency between the CFs in the Layers having different angles of fiber orientation is increased and the electroconductivity between the Layers having different angles of fiber orientation can be improved in the CFRP of the present invention shown in FIG. 1, because the particles and the resin introduced into the low Vcf domains push and spread the carbon fiber sheet, as compared to the CFRP of prior art shown in FIG. 10.

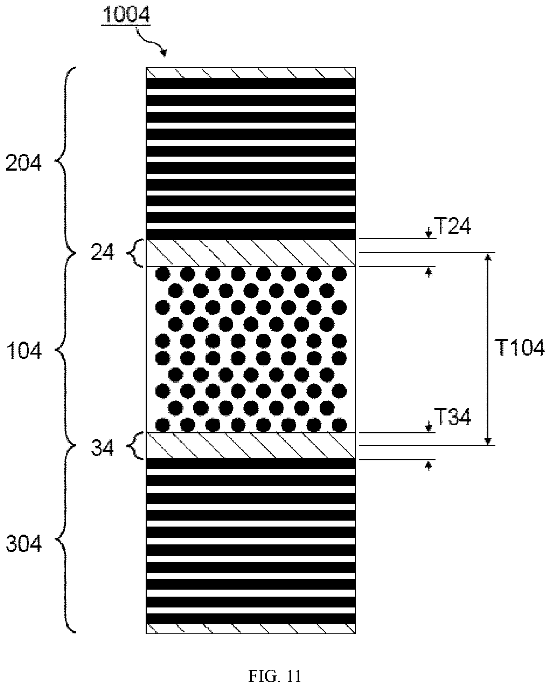

FIG. 11 is a cross-sectional view showing one form of a conventional interlayer-reinforced CFRP which is different from the CFRP shown in FIG. 10. The CFRP shown in FIG. 11 does not have a structure in which a low Vcf domain(s) is/are present in a Layer having the same angle of fiber orientation, and thick inter-Layer resin layers 24 and 34 are present between Layers. The above-described inter-Layer resin layers 24 and 34 are resin-rich Layers mainly for improving the toughness, and often contain thermoplastic resin particles, fibers, a nonwoven fabric or the like in the interior thereof. Even if the Layer thickness and the mean value of the Vcf are the same, the inter-Layer resin layers 24 and 34 in the interlayer-reinforced CFRP often require a thickness equal to or more than a certain value. Accordingly, the CFRP of the present invention in which the CFs are more easily brought into contact with each other has a higher electroconductivity between Layers, than the interlayer-reinforced CFRP.

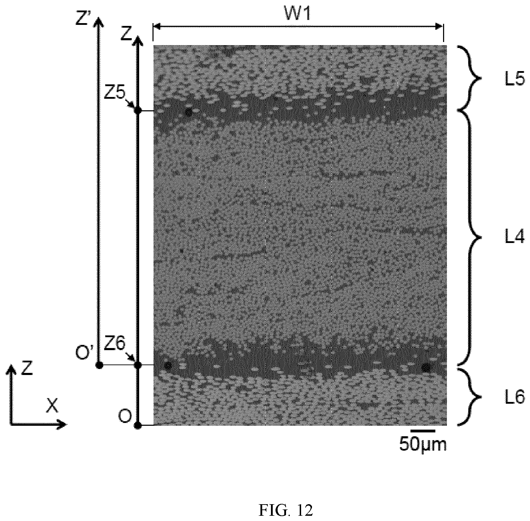

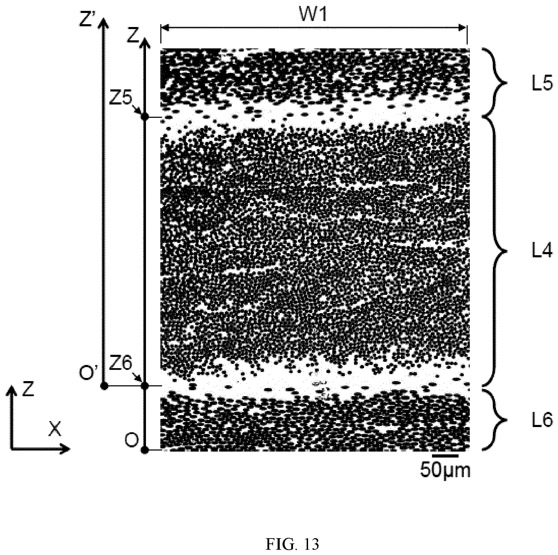

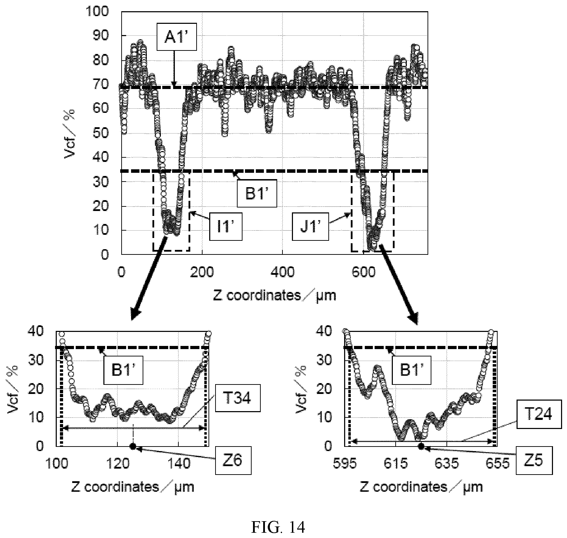

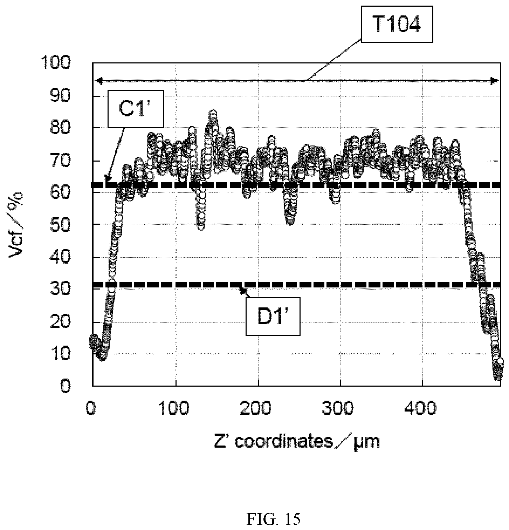

A cross-sectional photograph of one form of a conventional interlayer-reinforced CFRP is shown in FIG. 12, and a detailed description thereof will be given. FIG. 12 shows a Layer L4 and parts of Layers L5 and L6, in the CFRP composed of the Layers L4, L5 and L6. Binarizing the image shown in FIG. 12 gives the image shown in FIG. 13. When the distribution in the Z-axis direction of the Vcf is calculated in the same manner as the method described above, using FIG. 13, the graph shown in 14 can be obtained. First, the boundaries between the Layers are determined in the same manner as the method described above. In FIG. 14, the median value of the Vcf is A1', and this is taken as the representative value of the Vcfs of the regions of the Layers L4, L5 and L6 included in the cross-sectional photograph. Multiplying A1' by 0.5 gives B1', as the threshold value for defining the inter-Layer resin layer. In FIG. 14, I1' and J1', which are portions having a Vcf lower than B1', are present in the vicinity of the boundaries between the Layers. I1' and 11' are defined as the inter-Layer resin layers, and the thicknesses T34 and T24 of the inter-Layer resin layers are defined by the Z-coordinate lengths corresponding to I1' and J1', respectively. The median values of the Z coordinates of the portions corresponding to I1' and 11' are the Z coordinates of the boundaries between the Layers L4 and L6 and between the Layers L4 and L5, respectively, which are Z6 and Z5, respectively. Next, focusing only on the Layer L4, the Z' axis shown in FIG. 13 is newly set, and as a result, the distribution in the Z'-axis direction of the Vcf in the Layer L4 can be obtained as shown in FIG. 15. The thickness T104 of the Layer L4 is a value obtained by subtracting Z6 from Z5, which is defined as the maximum value of the Z' coordinate. The mean value of the Vcf of the Layer L4 is defined by the mean value of the distribution in the Z' direction of the Vcf, and corresponds to C1' in FIG. 15. A value obtained by multiplying C1' by 0.5 is the threshold value for defining the low Vcf domain, and corresponds to D1'. Since a portion having a Vcf lower than D1' does not exist, except for the inter-Layer resin layers at the upper end and lower end portions of the Layer, it is regarded that no low Vcf domain is present. Although the mean value of the Vcf of the entire Layer is 50% or more in the Layer L4, the "Specific Layer" does not exist because the low Vcf domain is absent, and therefore, this CFRP is not the CFRP according to the present invention.

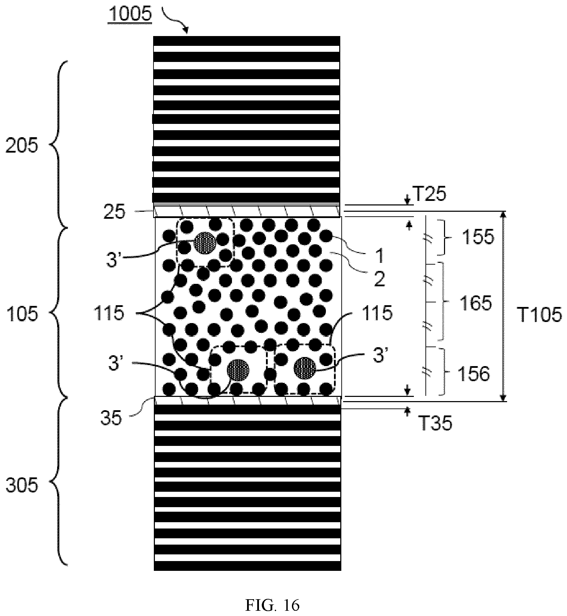

FIG. 16 is a cross-sectional view of a CFRP which is different from a conventional interlayer-reinforced CFRP, and which is also different from one shown in FIG. 11. In FIG. 16, a Layer 105 having the same angle of fiber orientation includes low Vcf domains 115. However, the low Vcf domain(s) is/are present only in surface layer 155 or 156 of the Layer 105, and the Layer 105 does not satisfy the requirement (4). In cases where the low Vcf domains are present only in the surface layers of the "Specific Layer", the introduced particles and resin fail to push and spread the carbon fiber sheet, or alternatively, even if the introduced particles and resin could push and spread the carbon fiber sheet, only the surrounding CFs in the vicinity of the surface layers of the Layer are pushed and spread locally, and further, the variation in the thickness of each of inter-Layer resin layers 25 and 35 increases. Further, the contact between the CFs in the inter-Layer resin layers becomes non-uniform at the boundaries with the adjacent Layers, and thus, the variation in the electroconductivity increases. In the present invention, in contrast, the CFs in the entire Layer can be evenly pushed and spread by forming a certain amount of low Vcf domains in the inner layer, making it possible to obtain a CFRP capable of achieving a high electroconductivity and having a small variation in the electroconductivity.

Next, the method of obtaining the CFRP according to the present invention will be described, taking as an example, a UD prepreg in which a matrix resin mainly composed of a thermosetting resin is used.

< Method of Producing Prepreg as Precursor of CFRP according to Present Invention >

The method of producing a prepreg, as a precursor of the CFRP according to the present invention, is not particularly limited. For example, a hot-melt process such as one described below can be used. First, a combination of an epoxy resin, an aromatic amine hardener, a thermoplastic resin and particles is kneaded to prepare a matrix resin. Thereafter, the matrix resin is coated to form a matrix resin film. The matrix resin film is laminated on a separately prepared UD sheet composed of CFs, and the resulting product is further impregnated with the matrix resin to obtain a prepreg. The use of a multi-stage push-in method in which the matrix resin is pushed in two or more times in stages with a plurality of heated nip rolls, as the impregnation method, allows the particles to effectively flow into the interior of the carbon fiber sheet along with the resin. The mechanism of the effect obtained by such a multi-stage push-in can be thought as follows. The first push-in pushes the matrix resin into the CF sheet. At the same time, however, the CFs in the inner layer portion are densely filled, and the filtration effect by the CFs densely filled with the particles may restrict the particle component from flowing into the inner layer portion of the CF sheet. If the push-in pressure is released once, the CFs spring back to allow CF single fibers to be rearranged, forming gaps between the CF single fibers. Thus, it is thought that the second push-in allows the particles to more easily flow into the inner layer portion of the CF sheet. Accordingly, although it is effective to perform push-ins as many times as possible, the number of push-ins can be selected considering the balance between the cost and the size of the impregnation equipment to be used and the present effect. In general, the number of push-ins is twice or more and 10 times or less. The effect of allowing the particles to flow in can further be increased by allowing the CFs to spring back between the n-th push-in and the (n + 1)-th push-in, and by maintaining a sufficiently low viscosity of the matrix resin. To achieve this, it is preferred to reheat the prepreg between the n-th push-in and the (n + 1)-th push-in. The reheating can be performed by methods using various types of heating apparatuses, for example, contact heating using a hot plate or the like, non-contact heating using an infrared heater or the like, as well as a method of passing over a heating roll without applying a pressure. Further, the effect of rearrangement of the CF single fibers due to the spring back can be obtained by setting the interval between the n-th push-in and the (n + 1)-th push-in to 0.1 seconds or more and 5 seconds or less. The control (reheating, push-in interval, etc.) for improving the spring back effect is more effective particularly when performed between the first and the second push-in, but performing the push-in in the latter stage as well leads to a further increase in the effect.

In general, an increase in the thickness of the prepreg results in an increase in the thickness of the CF sheet, and thus, in a longer impregnation distance. This increases the level of difficulty of impregnation, and makes it more difficult for the particles to flow into the inner layer portion of the CF sheet. However, the use of the present method enables to obtain a prepreg suitable as a precursor of the CFRP according to the present invention, in which the particles have flowed into the inner layer portion of the CF sheet, even in the case of a thick prepreg. As a result, it is possible to substantially form high Vcf portions due to the volume exclusion effect as described above, by allowing the particles to flow in, and to effectively improve the electroconductivity of the CFRP. The use of the above-described production method provides a more remarkable effect, in the production of a thick prepreg having a CF areal weight of 350 g/m$^2$ or more.

In the case of using a so-called "S-wrap" in which large diameter rolls, instead of nip rolls, are arranged in the form of the letter "S", as the impregnation apparatus, heating and impregnation are performed when the prepreg passes over the roll surfaces. During the heating and impregnation, a pushing pressure due to transport tension is constantly generated in the direction perpendicular to the out-of-plane vertical direction. Therefore, the prepreg is constantly pushed in the CF thickness direction, and the spring back of the CF single fibers cannot be expected much.

As the method other than the hot-melt process, it is also possible to use a method in which the matrix resin is directly coated on the CF sheet, for example, by a die coater, a spray coater or the like, such as one described in WO 2018/173618, WO 2018/173619, etc., followed by impregnation. Further, it is possible to pass the CF sheet through a bath filled with the matrix resin, to simultaneously perform the coating and impregnation of the matrix resin. Even in this case, it is also possible to perform an additional impregnation after passing through the bath, to achieve a higher level of impregnation and flowing-in of the particles.

< Method of Producing CFRP according to Present Invention >

After laminating the prepregs prepared as described above to obtain a prepreg laminate, the prepreg laminate can be molded by a so-called heat press molding method, in which the laminate is shaped by pressing and heating while curing the resin. The heat press molding method can be selected as appropriate from methods such as press molding, autoclave molding, vacuum pressure molding and bagging molding, in either case where the main component of the matrix resin is a thermosetting resin or a thermoplastic resin. In the case of using an epoxy resin, the molding of the CFRP is performed at a temperature of usually from 130°C to 220°C. In cases where the main component of the matrix resin is a thermosetting resin, the autoclave molding method is desired, because a molding with less voids is more likely to be obtained. The molding pressure to be used in the autoclave molding method varies depending on the thickness of the prepreg, the volume content factor of the CFs and the like, but is usually from 0.1 MPa to 1.0 MPa. This allows for obtaining a high-quality CFRP without defects such as voids.

The CFRP according to the present invention can be suitably used in a structure for an aircraft. Examples of the structure for an aircraft include a flat plate structure, a cylindrical structure, a box-shaped structure, a C-shaped structure, an H-shaped structure, an L-shaped structure, a T-shaped structure, an I-shaped structure, a Z-shaped structure and a hat-shaped structure. Aircraft parts are formed by combining these structures. The details are described, for example, in "Aircraft Structural Design" 5th Edition, Torikai, Kuze, Japan Aeronautical Engineers' Association (2003). Such structures can be obtained, for example, by shaping prepregs as described in the paragraph [0084] in WO 2017/110991.

Next, an example of the CFRP according to the present invention having a Layer thickness of 300 $\mu$m or more will be described.

Even in the case of producing a CFRP having such a large Layer thickness, the CFRP can be obtained by the same procedure, after preparing a prepreg composed of a thick carbon fiber sheet in the same manner as the above-described method of producing a prepreg. However, it is preferred to produce the CF sheet such that the CF areal weight during the preparation of the prepreg is 320 g/m$^2$ or more (conceivable CF areal weight is 370 g/m$^2$ or more and 550 g/m$^2$ or less). Further, it is preferred to increase the number of push-ins, considering the fact that the impregnation distance is longer than the case of producing a prepreg having a CF areal weight in the 270 g/m$^2$ class. It is of course possible to the produce the prepreg by single sheet production, in addition to continuous production. For example, the following method can be exemplified. Specifically, a CF sheet having a desired CF areal weight is sandwiched between two matrix resin films, to be formed in to a sheet. The resin content is adjusted, for example, to 34% by mass. In the case of using matrix resin films such as those described in Example 1, the matrix resin films are heated to a temperature of 60°C or higher, then the resulting sheet is maintained at a pressure of 3 MPa for 5 seconds in a pressing machine, followed by decompression, and further maintained at a pressure of 3 MPa for 5 seconds. The time interval from the completion of the decompression to re-pressurization is set to one second or more and 5 seconds or less. After preparing the prepreg in this manner, the molding of the CFRP can be performed. In cases where the CF areal weight is adjusted to 536 g/m$^2$, the thickness of the "Specific Layer" in the thus prepared CFRP is about 520 $\mu$m. At this time, the mean value of the carbon fiber volume content factor, Vcf, is about 60%; low Vcf domains having a Vcf of 0.5 or less, when the mean value of the Vcf of the Layer is defined as 1, are present in the surface layers and in the inner layer; and the area ratio of the low Vcf domains present in the surface layers of the "Specific Layer" and the low Vcf domains present in the inner layer thereof is about 60:40. Further, the area proportion of the low Vcf domains, when the cross-sectional area of a cross section in an out-of-plane direction of the entire Layer is taken as 100%, is about 8%. Still further, the electroconductivity in the thickness direction is about 28 S/m, and a high effect of reducing edge glow can be expected.

Next, an example of the CFRP according to the present invention using a thermoplastic resin will be described.

For example, two matrix resin films are prepared, in which PEI is used as a thermoplastic resin and 4% by mass of carbon particles "NICABEADS (registered trademark)" ICB 2020 are incorporated as electroconductive particles. A CF sheet in which a plurality of CFs are aligned uniformly and unidirectionally is sandwiched between the above-prepared films, to prepare a single sheet. At this time, the CF areal weight is adjusted to 536 g/m$^2$, and the resin content is adjusted to 34% by mass. The resulting sheet is maintained at a temperature of 340°C and a pressure of 3 MPa for 3 minutes, followed by decompression, and further maintained at a temperature of 340°C and a pressure of 3 MPa for 3 minutes. Further, the time interval from the completion of the decompression to re- pressurization is set to one second or more and 5 seconds or less. Eight plies of the thus prepared prepreg are laminated (alternately at 0°/90°) to prepare a prepreg laminate. The resulting prepreg laminate is maintained at a temperature of 340°C and a pressure of 3 MPa for 5 minutes in a pressing machine, to prepare a CFRP. In the "Specific Layer" in the thus obtained CFRP, the thickness of the Layer is about 530 $\mu$m; the mean value of the Vcf is about 60%; low Vcf domains having a Vcf of 0.5 or less, when the mean value of the Vcf of the Layer is defined as 1, are present in the surface layers and in the inner layer; and the area ratio of the low Vcf domains present in the surface layers of the Layer and the low Vcf domains present in the inner layer thereof is about 70:30. Further, the area proportion of the low Vcf domains, when the cross-sectional area of a cross section in an out-of-plane direction of the entire "Specific Layer" is taken as 100%, is about 4%. The electroconductivity in the thickness direction of the CFRP is about 15 S/m, the change in the resistance of the coil is sufficiently large, and an excellent induction heating temperature can be expected.

Examples

The present invention will be described below in further detail, with reference to Examples. It is noted, however, that the present invention is not construed as being limited to these examples. The unit "part(s)" of the composition ratio refers to "part(s) by mass" unless otherwise specified. Various properties (physical properties) were measured in an environment of a temperature of 23°C and a relative humidity of 50%, unless otherwise specified.

< Raw Materials Used in Examples and Comparative Examples >

(1) Carbon Fibers

Carbon fibers containing 24,000 filaments, and having a tensile strength of 5.8 GPa and a tensile modulus of 280 GPa, were used.

(2) Epoxy Resin

"SUMI-EPOXY (registered trademark) "ELM-434 (tetraglycidyl diaminodiphenylmethane, manufactured by Sumitomo Chemical Co., Ltd.)
"EPICLON (registered trademark)" 830 (bisphenol F epoxy resin, manufactured by DIC Corporation)
"TOREP (registered trademark)" A-204E (*N,N*-diglycidyl-*p*-phenoxyaniline, manufactured by Toray Fine Chemicals Co., Ltd.)
"EPICLON (registered trademark)" HP-7200L (dicyclopentadiene epoxy resin, manufactured by DIC Corporation)
"jER (registered trademark)" 825 (bisphenol A epoxy resin, manufactured by Mitsubishi Chemical Corporation)

(3) Hardener

"SEIKACURE-S (registered trademark)" (4,4'-DDS, manufactured by Seika Corporation)
"3,3'-DAS (registered trademark)" (3,3'-DDS, manufactured by Mitsui Fine Chemicals, Inc.)

(4) Thermoplastic Resin

"SUMIKAEXCEL (registered trademark)" 5003P (PES, manufactured by Sumitomo Chemical Co., Ltd.)
"Toray Cetex (registered trademark)" TC1000 (PEI, manufactured by Toray Advanced Composites)

(5) Polymer Particles

Spherical polyamide 6 particles (having a volume frequency-based mode diameter of 15 $\mu$m and a sphericity of 96%, produced by the method described below)
With reference to WO 2018/207728, 200 g of $\varepsilon$-caprolactam (manufactured by Toray Industries, Inc.), 800 g of polyethylene glycol (primary polyethylene glycol 20,000, having a weight-average molecular weight of 18,600; manufactured by Wako Pure Chemical Industries, Ltd.), as a second component polymer, and 1,000 g of water were introduced into a 3-litter autoclave equipped with a helical ribbon type stirring blade, to form a homogeneous solution. Then the autoclave was sealed, and replaced with nitrogen. Thereafter, the stirring speed was set to 100 rpm, and the solution was heated to a temperature of 240°C. At this time, the pressure of the system was controlled while slightly releasing the pressure of the water vapor, so as to maintain the pressure at 10 kg/ cm$^2$ after reaching 10 kg/ cm$^2$. After the temperature reached 240°C, the pressure was released at a rate of 0.2 kg/cm$^2$ per minute. Subsequently, the temperature was maintained for 1 hour under a nitrogen flow to complete the polymerization, and the solution was discharged into 2,000 g of water bath, to obtain a slurry. After dissolving dissolvable substances, the slurry was filtered, and 2,000 g of water was added to the residue, to perform washing at 80°C. Thereafter, a slurry solution obtained by filtering through a 200 $\mu$m sieve to

remove aggregates was filtered again to isolate the residue, which was dried at 80°C for 12 hours to prepare 140 g of polyamide 6 powder. The resulting powder had a melting point of 218°C, which is the same as that of polyamide 6, and had a crystallization temperature of 170°C. The particle size of the powder was measured using MT 3300II (light source: 780 nm-3mW, wet cell (medium: water)) manufactured by Microtrac Inc.

(6) Electroconductive Particles (Carbon Particles, hereinafter, sometimes referred to as "CP")

"NICABEADS (registered trademark)" ICB 4420 (number frequency-based average particle size: 27 $\mu$m, manufactured by Nippon Carbon Co., Ltd.)
"NICABEADS (registered trademark)" ICB 2020 (number frequency-based average particle size: 15 $\mu$m, manufactured by Nippon Carbon Co., Ltd.)
"NICABEADS (registered trademark)" ICB 1020 (number frequency-based average particle size: 12 $\mu$m, manufactured by Nippon Carbon Co., Ltd.)
"NICABEADS (registered trademark)" ICB 0520 (number frequency-based average particle size: 5 $\mu$m, manufactured by Nippon Carbon Co., Ltd.)
Large diameter CPs: "NICABEADS (registered trademark)" ICB 4420 were filtered through a 50 $\mu$m mesh, and the CPs remaining on the mesh were added to "NICABEADS (registered trademark)" 4420 that had not been filtered through the mesh, to obtain large diameter CPs (number frequency-based average particle size: 40 $\mu$m).

(7) Electroconductive Aid (Carbon Black)

Mitsubishi "Carbon Black" #3230B (particle size of primary particles: 23 nm (arithmetic mean diameter determined by observing the carbon black particles with an electron microscope), manufactured by Mitsubishi Chemical Corporation.

< Various Evaluation Methods >

(1) Preparation of Matrix Resin (Resin Composition)

A. Resin composition for one-stage impregnation (Examples 1 to 20 and Comparative Example 5)

The epoxy resins and the thermoplastic resin were kneaded, heated to 150°C or higher, and stirred for 1 hour at that temperature to melt the thermoplastic resin, thereby obtaining a transparent viscous liquid. After cooling the thus obtained liquid while kneading, the hardener, the polymer particles, the electroconductive particles, the electroconductive aid and the like were added to the liquid, and the mixture was kneaded to obtain a primary resin composition.
The composition ratio (the unit in Table 1 is "parts by mass") of the epoxy resins, the thermoplastic resin and the hardener used in each Example is shown in Table 1. Further, the type of electroconductive particles, the amount of the electroconductive particles, the type of the polymer particles, the amount of the polymer particles and the amount of the electroconductive aid used in each Example are shown in Tables 2 to 10.

B. Resin composition for two-stage impregnation (Comparative Examples 1 to 4)

The epoxy resins and the thermoplastic resin were kneaded, heated to 150°C or higher, and stirred for 1 hour at that temperature to melt the thermoplastic resin, thereby obtaining a transparent viscous liquid. After cooling the thus obtained liquid while kneading, the hardener and the electroconductive aid were added to the liquid, and the mixture was further kneaded to obtain a primary resin composition.
Further, the epoxy resins and the thermoplastic resin were kneaded, heated to 150°C or higher, and stirred for 1 hour at that temperature to melt the thermoplastic resin, thereby obtaining a transparent viscous liquid. After cooling the thus obtained liquid while kneading, the hardener, the polymer particles, the electroconductive particles, the electroconductive aid and the like were added to the liquid, and the mixture was kneaded to obtain a secondary resin composition.
The composition ratio (the unit in Table 1 is "parts by mass") of the epoxy resins, the thermoplastic resin and the hardener used in each Comparative Example is shown in Table 1. Further, the type of electroconductive particles, the amount of the electroconductive particles, the type of the polymer particles, the amount of the polymer particles and the amount of the electroconductive aid used in each Comparative Example are shown in Tables 2 to 10.

(2) Preparation of CF Prepreg

A. One-stage Impregnated Prepreg

A one-stage impregnated prepreg was prepared using the one-stage impregnation method. The primary resin composition prepared in the section (1) A was uniformly coated on a silicone-coated release paper using a coater, to prepare a resin film. Uniformly and unidirectionally aligned carbon fibers were sandwiched between two resin films. The resulting product was heated and pressed multiple times in stages, using nip rolls, to obtain a prepreg in which the unidirectionally aligned carbon fibers were sufficiently impregnated with the primary resin composition. At this time, pressing was performed two or more times, using the nip rolls. The interval from the completion of the previous pressing to the start of the subsequent pressing was set to 2 seconds, and reheating was performed between the press treatments, except for the examples otherwise specified. The details thereof are shown in Tables 2 to 10.

The fiber areal weight of the primary prepreg was 268 $g/m^2$, unless otherwise specified. The resin content in each Example and Comparative Example is shown in Tables 2 to 10 in % by mass.

The impregnation rate of the resulting prepreg, as measured by the water pick-up method, was from 1 to 5%. This suggests that the amount of carbon fibers in unimpregnated regions in the prepreg to which the resin composition had not adhered is small, and this makes it possible to reduce the adhesion of fluff to guide rolls during the transportation of a prepreg tape by an automatic lamination apparatus, such as AFP. Further, the adhesion of the matrix resin or fluff to the slit blade can be reduced during the slitting for obtaining a prepreg tape. The tack force between the prepreg and a metal was within the range of from 0.2 to 0.5 N, indicating preferred tackiness capable of achieving stickiness and repairability at the start of the AFP as well as a good transportability in the AFP, at the same time.

The impregnation rate as measured by the water pick-up method, as used herein, is measured as follows. The prepreg is cut in the width direction thereof at regular intervals, in a size of 100 mm × 100 mm taking 0° and 90° as two sides, to obtain five prepregs as test pieces, and the mass W1 of each prepreg is measured in advance. Each prepreg is arranged such that the fiber direction of the prepreg is the vertical direction, and a region 5 mm from the end of one side of the prepreg (that is, , a region of 100 mm × 5 mm) is immersed in water for 5 minutes. After wiping the moisture adhered to the surface of each resulting prepreg with a rag for wiping or the like, the mass W2 of each prepreg is determined. The amount of increase in moisture determined from (W2 - W1) is divided by W1 and expressed in percentage, and the mean value thereof for a total of five prepregs is used as the impregnation rate.

The tack force of the prepreg was measured using a tack tester (PICMA Tack Tester II; manufactured by Toyo Seiki Co., Ltd.). The prepreg to be measured was set to the tack tester, and a 18 mm × 18 mm stainless steel plate (SUS 304) on which a glass plate had been pasted was lowered at a rate of 10 mm/m from above the prepreg. Immediately after touching the prepreg, the stainless steel plate was raised at a rate of 10 mm/min. The peeling load at the time of peeling the stainless steel sheet from the prepreg was measured, and was defined as the tack force of the prepreg.

B. Two-stage Impregnated Prepreg

(a) Primary Prepreg

The primary resin composition prepared in the section (1) B was uniformly coated on a silicone-coated release paper using a coater, to prepare a primary resin film. Uniformly and unidirectionally aligned carbon fibers were sandwiched between two primary resin films prepared above. The resulting product was heated and pressed using press rolls, to obtain a primary prepreg in which the unidirectionally aligned carbon fibers were sufficiently impregnated with the primary resin composition. Unless otherwise specified, the fiber areal weight of the primary prepreg was 268 $g/m^2$, and the resin content was 20% by mass.

(b) Secondary Prepreg

A primary prepreg (having a fiber areal weight of 268 $g/m^2$ and a resin content of 20% by mass, unless otherwise specified) obtained in accordance with the section (2) B (a) was prepared. Subsequently, the secondary resin composition prepared in the section (1) B was uniformly coated on a silicone-coated release paper using a coater, to prepare a secondary resin film. Thereafter, the release papers on both surfaces of the primary prepreg were peeled off. Then the primary prepreg was sandwiched between the secondary resin films, the resulting product was heated and pressed using press rolls, to obtain a secondary prepreg in which the secondary resin was impregnated into the primary prepreg from both surfaces thereof. The fiber areal weight of the secondary prepreg is 268 $g/m^2$, and the resin content is 34% by mass.

(3) Molding of CFRP

The plies of each of the thus prepared prepregs were laminated in $[0/90]_{2S}$ configuration, and the resin was cured in an autoclave for 2 hours at a temperature of 180°C, a pressure of 6 kg/ cm$^2$ and a temperature ramp rate of 1.7 °C/min, to prepare a CFRP (flat plate structure).

(4) Cross-sectional Observation of CFRP

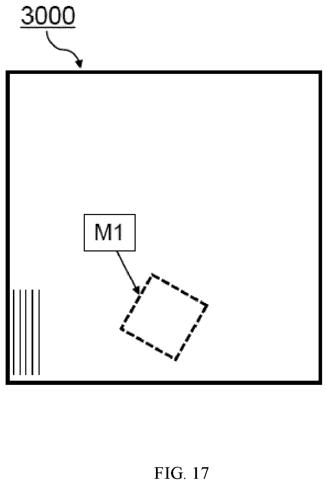

A sample with a size of about 20 mm $\times$ 20 mm, as shown by the dashed line indicating M1, was cut out from a CFRP panel 3000 after the molding whose top view is shown in FIG. 17, to obtain a sample for observation. The sample for observation is a sample obtained by cutting the CFRP panel along the 30° and 120° directions thereof, when the fiber direction of the outermost surface Layer of the CFRP panel is defined as the 0° direction. After embedding the sample with an epoxy resin and curing the resin, the edge portion of the sample was polished. The thus polished surface was observed with a digital microscope, VHX-5000, manufactured by Keyence Corporation. The observation was performed basically at a magnification of 500 times.

(5) Sphericity and Particle Size

The sphericity of the particles was determined by selecting 30 particles at random from a cross-sectional photograph of the CFRP, which had been captured at a magnification of 500 times in accordance with the method described in the section (4), and calculating from the minor axes and the major axes thereof, in accordance with the following equation.

[Equation 2]

$$S = \sum_{i=1}^{n} (b/a)/\mathrm{n} \times 100$$

In the above equation, S represents the sphericity (%), a represents the major axis, b represents the minor axis, and n represents the measured number: 30.
The diameter of the particles was determined from the cross-sectional photograph of the CFRP, which had been captured at a magnification of 500 times in accordance with the method described in the section (4). The median diameter was determined as follows. Thirty particles were selected at random, and the arithmetic mean value of the minor axis b and the major axis a of each particle was taken as the diameter D of the particle. When all the values of the particle size D were arranged in the order of magnitude, the value in the middle was defined as the median diameter Dm. Specifically, when the 30 values that were arranged in the order of magnitude are indicated as D1 < D2<...... < D30, the value of (D15 + D16)/2 was defined as the median diameter.

(6) Image Analysis of Cross Section of CFRP

A. Method of Calculating Vcf

A cross section of the CFRP was cut out, and an image was captured at a magnification of 500 times, taking the thickness direction of the CFRP as the Z axis, and taking the axis that is orthogonal to the Z axis in the cross section as the X axis. In cases where the target Layer cannot be captured within one image, a plurality of images were connected to obtain the image of the target Layer. At this time, the image was captured so as to include portions of the Layers adjacent to the upper and lower sides of the target Layer. Examples of the image are shown in FIG. 2 and FIG. 12. The origin of the Z axis was set to the lower end of the cross-sectional photograph.
First, the distribution in the Z-axis direction of the Vcf was determined. The image was binarized (FIG. 3 or FIG. 13) using ImageJ, to distinguish CFs (black) from the matrix resin (white). The Vcf was calculated from the area proportion of the black portions. A rectangular region having a length of 0.2 $\mu$m in the Z-axis direction, and having a length of the entire X axis in the image in the X-axis direction, was taken as the evaluation range, to calculate the Vcf. The Vcf in the evaluation range was calculated at every 0.2 μm interval from the origin of the Z axis toward the Z-axis direction, to obtain the distribution in the Z-axis direction of the Vcf.

B. Method of Calculating Thickness of Inter-Layer Resin Layer in between with Adjacent Layer

The median value, of the distribution in the Z-axis direction of the Vcf obtained in the section (6) A, was taken as the representative value of the Vcfs. A portion in between with an adjacent Layer in which the Vcf is 0.5 times or less the median value, was defined as an inter-Layer resin layer. The thickness of the inter-Layer resin layer was defined by the length in the Z-axis direction of the portion corresponding to the inter-Layer resin layer. The Z coordinate of the boundary between Layers is defined as the midpoint of the Z coordinates of the portion corresponding to the inter-Layer resin layer. In cases where the portion in between with an adjacent Layer in which the Vcf is 0.5 times or less the median value is absent, it is regarded that the inter-Layer resin layer is absent, and the thickness of the inter-Layer resin layer was determined to be 0. In this case, the Z coordinate of the boundary between Layers is defined as the Z coordinate of the point having the minimum Vcf value, in the vicinity of the region between the Layers.

C. Method of Evaluating Entire Layer

Using the Z coordinates of the boundaries with the upper and lower adjacent Layers obtained in the section (6) B, the distribution in the Z-axis direction of the Vcf, of one Layer excluding the upper and lower adjacent Layers, was extracted. The mean value of the Vcf of the extracted Layer was defined as the mean value of the distribution in the Z-axis direction of the Vcf of the one Layer. The thickness of the Layer is defined as the difference between the Z coordinates of the boundaries with the upper and lower adjacent Layers.

D. Method of Evaluating Low Vcf domain

Using the distribution in the Z-axis direction of the Vcf of the one Layer obtained in the section (6) C, the value at which the ratio of the Vcf to the mean value of the Vcf of the Layer is 0.5 was calculated, which was taken as the threshold value for identifying as the low Vcf domain.

Subsequently, a range of 201 pixels in the Z-axis direction and 201 pixels in the X-axis direction was selected such that an arbitrary pixel in the one Layer in the binarized and connected image obtained in the section (6) A is the center of the range, and the Vcf of the range was calculated from the area proportion of the black portions, and the calculated Vcf was taken as the Vcf of the pixels. In the upper end or the lower end of the Layer, the portion other than the range of the Layer was not included in the calculation of the Vcf, and the Vcf was calculated from the area proportion of the black portions, in the same manner. The above-described operation was performed for the entire Layer. Pixels having a value equal to or less than the above-described threshold value for identifying as the low Vcf domain were determined as the low Vcf domains. The number of pixels determined as the low Vcf domains was divided by the total number of pixels in the analysis region, to determine the area proportion of the low Vcf domains in the "Specific Layer", when the cross-sectional area of the cross section in an out-of-plane direction of the entire "Specific Layer" is taken as 100%.

Further, using the Z coordinates of the boundaries with the upper and lower adjacent Layers obtained in the section (6) C, the 1/4 point and the 3/4 point between the coordinates were determined, and the region between the 1/4 point and the 3/4 point was defined as the inner layer (including the boundaries) of the Layer, and regions from the 1/4 point and the 3/4 point, to the upper and lower adjacent Layers (excluding the boundaries), respectively, were defined as the surface layers of the Layer (FIG. 5 and FIG. 8). Finally, the ratio of the area of the low Vcf domains in the outer layers and that in the inner layer of the Layer was determined, and defined as the area ratio of the low Vcf domains present in the surface layers and the Vcf domains present in the inner layer.

E. Method of Determining Number of Carbon Fibers in Contact with Adj acent Layer (a) The number of carbon fibers in contact with an adjacent Layer per 2 mm in the plane direction

In the cross-sectional photograph of the CFRP captured at a magnification of 500 times by the method described in the section (4), the number of carbon fibers in the target Layer to be measured which are evaluated to be in contact with carbon fibers included in a Layer adjacent to the target Layer was counted, in a section of 2,000 μm in the plane direction of the target Layer between the target Layer and the adjacent Layer. At this time, when the distance between the centers of gravity in carbon fiber cross sections, of two carbon fibers, is less than 3 times the average diameter of the carbon fibers, the two carbon fibers were determined to be in contact with each other.

(b) The number of carbon fibers in contact with carbon fibers in an adjacent Layer in each 0.4 mm section, when a section of 2 mm in the plane direction is observed at every 0.4 mm interval

For the carbon fibers evaluated to be in contact with carbon fibers included in an adjacent Layer determined in the section of 2,000 μm observed in the above (6) E (a), the section of 2,000 μm was divided into 5 sections at every 400 μm interval, and the number of carbon fibers evaluated to be in contact with carbon fibers included in the adjacent Layer was determined in each section. The thus determined number was defined as the number of carbon fibers in contact with carbon fibers included in the adjacent Layer, in each 0.4 mm section, when the section of 2 mm in the plane direction between the target Layer and the adjacent Layer is observed at every 0.4 mm interval.

(7) Electroconductivity in Thickness Direction of CFRP

CFRP panels were respectively prepared from the positions of 0 m, 5 m, 10 m, 15 m, 20 m and 25m from a certain point in the prepreg prepared continuously in the longitudinal direction, toward upstream in the longitudinal direction. Samples with a size of 40 mm × 40 mm were cut out from the CFRP panels along the 0° and 90° directions thereof, when the fiber direction of the outermost surface Layer of each CFRP panel is defined as the 0° direction. After polishing and removing about 50 μm from both surfaces of each sample, Ag paste was uniformly coated on both surfaces using a spatula, followed by curing over one hour in a hot air oven adjusted to a temperature of 120°C. In this manner, samples for evaluating the electroconductivity were obtained. The resistance in the thickness direction of the thus obtained samples was measured by the four-terminal method under the current load condition of a direct current of 5 mA, using an impedance analyzer (IM3570, manufactured by Hioki E.E. Corporation). The electroconductivity (S/m) was calculated from the measured resistance values and the sample size. Further, the variation in the electroconductivity in a total of six locations was evaluated in accordance with the following criteria. Excellent, Good, Fair and Bad were determined as "Pass", and Worse was determined as "Fail".

Excellent: having a CV value of less than 3%
Good: having a CV value of 3% or more and less than 10%
Fair: having a 10% or more and less than 30%
Bad: having a 30% or more and less than 50%
Worse: having a 50% or more

(8) Eddy Current Flaw Detection (Evaluation of Induction current)

The series resistance component of a copper coil (inner diameter: 10 mm, outer diameter: 14 mm, height: 3 mm, number of turns: 60, with a PPS bobbin (flange thickness: 1 mm), manufactured by Kitamoto Electric Works Co., Ltd.) was measured by the four-terminal method under the current load conditions of an alternating current of 5 mA and a frequency of 300 kHz, using an impedance analyzer (IM3570, manufactured by Hioki E.E. Corporation). The first measurement was performed with care not to place any electrical conductor in the vicinity of the coil. If an electrical conductor is placed in the vicinity of the coil, the series resistance component of the coil would change, and therefore, it was made sure not to place any electrical conductor within the range in which the series resistance component is affected. Next, the coil was set on the CFRP panel after molding so as to be in contact therewith, and the series resistance component of the coil was measured in the same manner. At this time, there is a distance of 1 mm between the coil portion and the CFRP panel, because the coil has a PPS bobbin. The change in the resistance of the coil was calculated by subtracting the measured result of the first measurement from the measured result of the series resistance component when the coil was set on the CFRP panel.

(9) Measurement of Compression Strength after Impact (CAI) in CFRP

Sixteen plies of unidirectional prepreg were pseudo-isotropically laminated in [+45° 0°/-45°/90°]2s configuration, and the resulting laminate was molded in an autoclave for 2 hours, at a temperature of 180°C, a pressure of 6 kg/cm$^2$ and a temperature ramp rate of 1.5°C/min, to prepare a CFRP. From the resulting CFRP, a sample with a size of 150 mm length ×100 mm width was cut out, and a drop impact of 6.7 J/mm was applied to the center of the sample in accordance with SACMA SRM 2R-94, to determine the compression strength after impact.

The respective Examples and Comparative Examples will be shown next. Resin A shown in Table 1 was used in Examples 1 to 18 and Comparative Examples 1 to 5.

(Examples 1 to 9)

In Examples 1 to 3, CFRPs were produced by the same production method, except for changing the type of carbon particles contained in the resin, as shown in Table 2. In the CFRPs of Examples 1 to 3, all the Layers meet the definition of the "Specific Layer". Each CFRP had a cross-sectional configuration including a low Vcf Layer in the inner layer and the surface layer(s), as shown in FIG. 1, and particles were present in some of the low Vcf domains. Further, evident inter-Layer resin layers as can be seen in FIG. 2 were not observed, and the CFRPs were different from so-called interlayer-reinforced CFRPs. The average number of particles present within a distance of 2 Dm from the center of each particle in each Specific Layer, is 3.5 or less; and the average distance from the center of each particle to the center of another particle closest to the particle, in the "Specific Layer", is 1.2 Dm or more. Furter, the particles were present sparsely, not locally, in the "Specific Layer", as a result of which the CFs in the entire Layer were pushed and spread by the particles. The electroconductivity in the thickness direction is much higher than 10 S/m, and the variation in the electroconductivity in the thickness direction was sufficiently small and evaluated as "Excellent". Therefore, it is thought that a high effect of reducing edge glow can be obtained regardless of the collecting position in the prepreg. In Example 4, a CFRP was produced in the same manner as in Example 2, except that the electroconductive aid was not used. Although the electroconductivity decreased as compared to the CFRP of Example 2, a sufficiently high electroconductivity was obtained. Further, it is thought that a high effect of reducing edge glow can be obtained regardless of the collecting position in the prepreg, as with the CFRPs of Examples 1 to 3. In Example 5, a CFRP was produced in the same manner as in Example 4, except for using a larger amount of carbon particles, and all the Layers in the CFRP are the "Specific Layer". In Example 5, the impregnation rate as measured by the water pick-up method, at the time of preparing the prepreg, was 1%. It can be seen that the electroconductivity in the thickness direction is effectively improved by increasing the amount of CPs, in the CFRP according to the present invention. In Example 6, a CFRP was produced in the same manner as in Example 3, except for using a larger amount of polymer particles, and all the Layers in the CFRP meet the definition of the "Specific Layer". The impregnation rate as measured by the water pick-up method, at the time of preparing the prepreg, was 3%. A sufficient electroconductivity in the thickness direction was obtained, as with the CFRP of Example 3. Further, the CAI is sufficiently high, as well, achieving both the impact resistance and a high electroconductivity at the same time. In Examples 7 and 8, CFRPs were produced in the same manner as in Examples 2 and 3, except that the amount of electroconductive aid and the amount of polymer particles were changed from those in Examples 2 and 3. In the embodiment of the present invention, it was possible to effectively improve the electroconductivity in the thickness direction, even with an increased amount of electroconductive aid. Further, the CAI is sufficiently high, as well, achieving both the impact resistance and a high electroconductivity at the same time. In Examples 5 to 8, it is thought that a high effect of reducing edge glow can be obtained regardless of the collecting position in the prepreg, as with the CFRPs of Examples 1 to 3. In Example 9, the prepreg was prepared in the same manner as in Example 1, except that reheating was not performed between the first push-in and the second push-in, at the time of preparing the prepreg. In a cross section of the CFRP of Example 9, low Vcf domains were unevenly distributed and present mainly in the surface layers, as in FIG. 16, and the amount of low Vcf domains present in the inner layer of the Layer was small. The electroconductivity in the thickness direction was more than 10 S/m. The variation in the electroconductivity in the thickness direction was within the acceptable range, and the effect of reducing edge glow can be expected. The CAI was sufficiently high, as well.

(Comparative Examples 1 to 3)

In Comparative Example 1, an interlayer-reinforced prepreg in which the amount of resin contained in the prepreg is the same as in above Examples, but which is produced by a conventional two-stage impregnation method, was used. When a cross section of the CFRP of Comparative Example 1 was observed, no low Vcf domain was present and evident inter-Layer resin layers could be observed, as in FIG. 11, and the particles were arranged in an orderly manner in the inter-Layer resin layers. Since the particles were locally present in the inter-Layer resin layers, the average number of particles present within a distance of 2 Dm from the center of each particle in the Layer was more than 3.5, and the average distance from the center of each particle to the center of another particle closest to the particle, in the Layer, was less than 1.2 Dm. The electroconductivity in the thickness direction was lower than 10 S/m. Since the electroconductivity was insufficient, it is thought that the effect of reducing edge glow is insufficient. In Comparative Examples 2 and 3, CFRPs were produced in the same manner as in Comparative Example 1, except that the amount of carbon particles, the amount of polymer particles and the amount of electroconductive aid were changed. The improvement in the electroconductivity in the thickness direction was insufficient in each of the resulting CFRPs. Thus, it is thought that the effect of reducing edge glow is insufficient.

(Comparison of Examples 1 to 8 with Comparative Examples 1 to 3)

In the CFRPs of Examples 1 to 8, the electroconductivity in the thickness direction was high, and the variation in the electroconductivity in the thickness direction was low and evaluated as "Excellent", and thus, a high effect of reducing edge glow can be expected. In the CFRPs of Comparative Examples 1 to 3, in contrast, the electroconductivity in the thickness direction was low, and it is thought that the effect of reducing edge glow is insufficient. Based on the comparison of Examples 1 to 8 with Comparative Examples 1 to 3, it is thought that introducing particles into the carbon fiber sheets along with the resin made it possible to significantly increase electroconductive paths relative to two-stage impregnated products and to improve the electroconductivity in the thickness direction (to improve the electroconductivity between adjacent Layers) in the one-stage impregnated products of Examples. As is evident from the above-described comparison, a higher effect of reducing edge glow can be expected with an amount of carbon particles smaller than that used in an interlayer-reinforced CFRP of prior art, in the CFRP according to the present invention.

Examples 10 to 19 will be described below. In the CFRPs of Examples 10 to 19, all the Layers meet the definition of the "Specific Layer".

(Examples 10 to 14)

In Example 10, a CFRP was produced in the same manner as in Example 3, except that the interval between pressing with nip rolls was changed to one second. In the CFRP of Example 10, the electroconductivity in the thickness direction was sufficiently high. The amount of low Vcf domains in the inner layer was small as compared to Example 3, and thus, the variation in the electroconductivity in the thickness direction depending on the prepreg collecting position was evaluated as "Good". Therefore, the effect of reducing edge glow can be expected.

In Example 11, a CFRP was produced in the same manner as in Example 1, except that the interval between pressing with nip rolls was changed to 0.5 seconds. In the CFRP of Example 11, the area proportion of the low Vcf domains in the Layer was smaller than that in Example 1. Therefore, the electroconductivity in the thickness direction was 15 S/m or more, which is sufficient, although being lower than 20 S/m which is the more preferred range. The variation in the electroconductivity in the thickness direction depending on the prepreg collecting position was sufficiently small and evaluated as "Excellent", and thus, the effect of reducing edge glow can be expected.

In Example 12, a CFRP was produced in the same manner as in Example 1, except that the interval between pressing with nip rolls was changed to 5 seconds. In the CFRP of Example 12, the area proportion of the low Vcf domains in the Layer was smaller than that in Example 1 and Example 10. Therefore, the electroconductivity in the thickness direction decreased as compared to Example 1, but was 14 S/m, which is within the acceptable range. The variation in the electroconductivity in the thickness direction depending on the prepreg collecting position deteriorated as compared to Example 1, but was within the acceptable range and evaluated as "Fair".

In Example 13, a CFRP was produced in the same manner as in Example 1, except that the diameter of CPs was further reduced. In the CFRP of Example 13, the median diameter Dm of the particles was lower than 6 μm, which is smaller than that in Example 1. Therefore, the electroconductivity in the thickness direction was 15 S/m or more, which is sufficient, although being lower than 20 S/m which is the more preferred range. The variation in the electroconductivity in the thickness direction depending on the prepreg collecting position was sufficiently small and evaluated as "Excellent", and thus, the effect of reducing edge glow can be expected.

In Example 14, a CFRP was produced in the same manner as in Example 3, except for using large diameter CPs. In the CFRP of Example 14, the electroconductivity in the thickness direction was sufficiently high. The proportion of particles having a diameter of 50 μm or more was more than 10%, which is higher than that in Example 3. Therefore, the variation in the electroconductivity in the thickness direction depending on the prepreg collecting position deteriorated as compared to Example 3, but was within the acceptable range and evaluated as "Fair".

(Examples 15 and 16, and Comparative Example 4)

In Example 15, a CFRP was produced in the same manner as in Example 8, except for not containing the carbon particles. In the CFRP of Example 15, the electroconductivity in the thickness direction decreased as compared to Example 8 due to not containing the carbon particles, but showed a sufficiently high electroconductivity in the thickness direction. The variation in the electroconductivity in the thickness direction depending on the prepreg collecting position was sufficiently small and evaluated as "Excellent", and thus, the effect of reducing edge glow can be expected. Further, the CAI was sufficiently high, as well, and a good impact resistance can be expected.

In Comparative Example 4, a CFRP was produced in the same manner as in Comparative Example 3, except for not containing the carbon particles. In the CFRP of Comparative Example 4, the effect of reducing edge glow was thought to be insufficient, due to the same reason as in Comparative Example 3.

In Example 16, a CFRP was produced in the same manner as in Example 9, except for not containing the carbon particles. In the CFRP of Example 16, the effect of reducing edge glow is within the acceptable range, due to the same reason as in Example 9. The CAI was sufficiently high, as well.

(Examples 17 to 19 and Comparative Example 5)

In Example 17, a CFRP was produced in the same manner as in Example 1, except that the push-in was performed at a force of 60 kgf. In the CFRP of Example 17, the electroconductivity in the thickness direction was high, because the area proportion of the low Vcf domains in the Layer was higher than that in Example 1, achieving more than 50%. Further the amount of low Vcf domains in the surface layers was small as compared to Example 1. Therefore, the variation in the electroconductivity in the thickness direction depending on the prepreg collecting position was within the acceptable range, and evaluated as "Fair". Based on the above, the effect of reducing edge glow can be expected.
In Example 18 and Comparative Example 5, CFRPs were produced in the same manner as in Example 3, except for changing the resin content. In the CFRP of Example 18, the mean value of the carbon fiber volume content factor, Vcf, in the Layer was 50% or more, but was lower than 55% which is the more preferred range. Therefore, the electroconductivity in the thickness direction was lower than that in Example 3, but was within the acceptable range. The variation in the electroconductivity in the thickness direction depending on the prepreg collecting position was small and evaluated as "Excellent", and thus, the effect of reducing edge glow can be expected. In the CFRP of Comparative Example 5, on the other hand, the mean value of the carbon fiber volume content factor, Vcf, in the Layer was lower than 50%, and the electroconductivity in the thickness direction was lower than 10 S/m. Therefore, it is thought that the effect of reducing edge glow was insufficient.
In Example 19, a CFRP was produced in the same manner as in Example 8, except that Resin B shown in Table 1 was used, and that the amount of carbon particles, the amount of polymer particles and the amount of electroconductive aid were changed. In the CFRP of Example 19, the electroconductivity in the thickness direction was high, the variation in the electroconductivity in the thickness direction depending on the prepreg collecting position was small and evaluated as "Excellent", and thus, the effect of reducing edge glow can be expected. Further, a very high CAI was obtained due to the effect of the dicyclopentadiene epoxy resin.

(Induction Heating Temperature)

Next, Example 1 was compared with Comparative Example 1 on the effect of improving the induction heating temperature. In Example 1, the change in the resistance of the coil was larger than that in Comparative Example 1, and showed a larger amount of induction current. Therefore, the results showed that an improvement in the induction heating temperature can be expected in Example 1.

(Example 20)

In Example 20, a CFRP was produced in the same manner as producing a two-stage impregnated product in Comparative Example 1, except that prepregs prepared in Example 1 were used only for two surface layers of the CFRP. When the portions corresponding the two surface layers were observed in a cross-sectional image of the CFRP, it was possible to identify the same form as those corresponding to the Specific Layer in Example 1. The change in the resistance of the coil in Example 20 was lower than that in Example 1 but higher than that in Comparative Example 1, and it was sufficient for improving the induction heating temperature. The above results revealed that at least one "Specific Layer" is preferably arranged within two Layers when the number of the Layers is counted from the upper surface or the lower surface of the carbon fiber-reinforced composite material, and that the effect of effectively improving the induction heating temperature can be expected by laminating a plurality of the Specific Layer, and further, by laminating two or more of the Specific Layer, consecutively.

[Table 1]

|  |  | Resin A | Resin B |
|---|---|---|---|
| Epoxy Resin | ELM-434 | 55 | - |
|  | EPICLON 830 | 20 | 25 |
|  | A-204E | 25 | - |
|  | EPICLON HP-7200L | - | 30 |
|  | JER 828 | - | 45 |

(continued)

|  |  | Resin A | Resin B |
|---|---|---|---|
| Thermoplastic Resin | 5003P | 12.2 | 12.2 |
| Hardener | 4,4'-DDS | 40.3 | - |
|  | 3,3'-DDS | - | 31.2 |

[Table 2]

Table 2

| | | | Example 1 | Example 2 | Example 3 | Example 4 | Example 5 | Example 6 |
|---|---|---|---|---|---|---|---|---|
| Composition | Type of resin | - | Resin A | Resin A | Resin A | Resin A | Resin A | Resin A |
| | Resin content | wt% | 34 | 34 | 34 | 34 | 34 | 34 |
| | Amount of carbon particles | wt% | 2 | 2 | 2 | 2 | 4 | 4 |
| | Type of carbon particles | $\mu$m | ICB 1020 | ICB 2020 | ICB 4420 | ICB 2020 | ICB 2020 | ICB 2020 |
| | Amount of polymer particles | wt% | 5 | 5 | 5 | 5 | 5 | 8.5 |
| | Amount of electroconductive aid | wt% | 1.5 | 1.5 | 1.5 | 0 | 0 | 0 |
| CFRP | Layer thickness | $\mu$m | 252 | 251 | 253 | 250 | 253 | 255 |
| | Mean value of carbon fiber volume content factor, Vcf, in Layer | % | 60 | 61 | 59 | 60 | 61 | 61 |
| | Low Vcf domains having a Vcf of 0.5 or less, when the mean value of Vcf of Layer is defined as 1, are included in surface layers and | - | Contained | Contained | Contained | Contained | Contained | Contained |
| | in inner layer | | | | | | | |
| | At least one low Vcf domain in Layer contains a particle(s) | - | Contained | Contained | Contained | Contained | Contained | Contained |
| | Area ratio of low Vcf domains present in surface layers and Vcf domains present in inner layer, of Layer | Surface layers : Inner layer | 49:51 | 68:32 | 70:30 | 53:47 | 47:53 | 57:43 |
| | Area proportion of low Vcf domains, when cross-sectional area of cross section in out-of-plane direction of the entire Layer is taken as 100% | % | 25 | 13 | 3 | 3 | 3 | 3 |
| | Number of carbon fibers in contact with adjacent Layer per 2 mm in plane direction | Number | 121 | 87 | 43 | 55 | 71 | 92 |

(continued)

| | | | Example 1 | Example 2 | Example 3 | Example 4 | Example 5 | Example 6 |
|---|---|---|---|---|---|---|---|---|
| | Breakdown at every 0.4 mm interval, of the number of carbon fibers in contact with adjacent Layer per 2 mm in plane direction (*) | Number | 17/24/23/28/29 | 14/18/8/24/23 | 6/7/14/7/9 | 7/10/10/19/9 | 21/17/10/10/13 | 18/22/22/17/13 |
| Particles | Median diameter Dm of particles | $\mu$m | 12 | 14 | 23 | 13 | 13 | 13 |
| | Proportion of particles having a diameter of 50 $\mu$m or more | % | 0% | 2% | 5% | 1% | 1% | 1% |
| | Electroconductive particles are contained in Low Vcf domains | - | Contained | Contained | Contained | Contained | Contained | Contained |
| | Thermoplastic particles are contained in Low Vcf domains | - | Contained | Contained | Contained | Contained | Contained | Contained |
| | Average number of particles present within distance of 2 Dm from the center of each particle in Layer | Number | 1.7 | 2.3 | 2.1 | 1.8 | 1.7 | 1.7 |
| | Average distance from the center of each particle to the center of another particle closest to the particle, in Layer | - | 2.1 Dm | 2.5 Dm | 1.8 Dm | 2.3 Dm | 2.3 Dm | 2.3Dm |
| Electroconductive properties | Electroconductivi ty in thickness direction | S/m | 34 | 33 | 28 | 25 | 39 | 40 |
| | Variation in electroconductivit y in thickness direction | - | Excellent | Excellent | Excellent | Excellent | Excellent | Excellent |
| Mechanical Properties | CAI | MPa | - | - | - | - | - | 228 |

* "/" indicates the division of sections, and the respective numbers indicate the numbers of carbon fibers in contact with adjacent Layer in 4 mm sections

Table 2 (Continued)

| Example 7 | Example 8 | Example 9 | Comparative Example 1 | Comparative Example 2 | Comparative Example 3 |
|---|---|---|---|---|---|
| Resin A | Resin A | Resin A | Resin A | Resin A | Resin A |
| 34 | 34 | 34 | 34 | 34 | 34 |
| 2 | 2 | 2 | 2 | 2 | 2 |
| ICB 2020 | ICB 4420 | ICB 4420 | ICB 4420 | ICB 4420 | ICB 4420 |
| 10 | 10 | 10 | 5 | 10 | 10 |
| 3 | 3 | 3 | 0 | 0 | 3 |
| 252 | 253 | 254 | 252 | 252 | 253 |
| 61 | 61 | 60 | 62 | 62 | 63 |
| Contained | Contained | Contained | Not Contained | Not Contained | Not Contained |
| Contained | Contained | Contained | - | - | - |
| 66:34 | 70:30 | 92:8 | - | - | - |
| 5 | 5 | - | - | - | - |
| 126 | 46 | 44 | - | - | - |
| 24/24/22/31/25 | 8/13/5/12/8 | 17/0/3/23/1 | - | - | - |
| 23 | 23 | - | - | - | - |
| 4% | 4% | - | - | - | - |
| Contained | Contained | - | - | - | - |
| Contained | Contained | - | - | - | - |
| 2.3 | 2.3 | 3.6 | 3.8 | 3.8 | 3.9 |
| 1.7 Dm | 1.7 Dm | 1.1 Dm | 1.1 Dm | 1.1 Dm | 1.1 Dm |
| 53 | 49 | 23 | 9 | 7 | 9 |
| Excellent | Excellent | Bad | - | - | - |
| 241 | 249 | 250 | - | - | - |

[Table 3]

Table 3

| Composition | | | | Example 3 | Example 10 |
|---|---|---|---|---|---|
| Composition | Type of resin | - | | Resin A | Resin A |
| | Resin content | wt% | | 34 | 34 |
| | Amount of carbon particles | wt% | | 2 | 2 |
| | Type of carbon particles | $\mu$m | | ICB 4420 | ICB 4420 |
| | Amount of polymer particles | wt% | | 5 | 5 |
| | Amount of electroconductive aid | wt% | | 1.5 | 1.5 |

(continued)

| | | | Example 3 | Example 10 |
|---|---|---|---|---|
| CFRP | Layer thickness | μm | 253 | 253 |
| | Mean value of carbon fiber volume content factor, Vcf, in Layer | % | 59 | 61 |
| | Low Vcf domains having a Vcf of 0.5 or less, when the mean value of Vcf of Layer is defined as 1, are included in surface layers and in inner layer | - | Contained | Contained |
| | At least one low Vcf domain in Layer contains a particle(s) | - | Contained | Contained |
| | Area ratio of low Vcf domains present in surface layers and Vcf domains present in inner layer, of Layer | Surface layers : Inner layer | 70:30 | 78:22 |
| | Number of carbon fibers in contact with adj acent Layer per 2 mm in plane direction | Numbe r | 43 | 51 |
| | Breakdown at every 0.4 mm interval, of the number of carbon fibers in contact with adjacent Layer per 2 mm in plane direction (*) | Numbe r | 6/7/14/7/9 | 13/3/14/18/3 |
| Particles | Electroconductive particles are contained in Low Vcf domains | Numbe r | Contained | Contained |
| | Thermoplastic particles are contained in Low Vcf domains | - | Contained | Contained |
| Electroconductive properties | Electroconductivity in thickness direction | S/m | 28 | 26 |
| | Variation in electroconductivity in thickness direction | - | Excellent | Good |
| * "/" indicates the division of sections, and the respective numbers indicate the numbers of carbon fibers in contact with adjacent Layer in 4 mm sections | | | | |

[Table 4]

Table 4

| | | | Example 1 | Example 11 | Example 12 |
|---|---|---|---|---|---|
| Composition | Type of resin | - | Resin A | Resin A | Resin A |
| | Resin content | wt% | 34 | 34 | 34 |
| | Amount of carbon particles | wt% | 2 | 2 | 2 |
| | Type of carbon particles | μm | ICB 1020 | ICB 4420 | ICB 4420 |
| | Amount of polymer particles | wt% | 5 | 5 | 5 |
| | Amount of electroconductive aid | wt% | 1.5 | 1.5 | 1.5 |

(continued)

| | | | Example 1 | Example 11 | Example 12 |
|---|---|---|---|---|---|
| CFRP | Layer thickness | μm | 252 | 254 | 253 |
| | Mean value of carbon fiber volume content factor, Vcf, in Layer | % | 60 | 59 | 60 |
| | Low Vcf domains having a Vcf of 0.5 or less, when the mean value of Vcf of Layer is defined as 1, are included in surface layers and in inner layer | - | Contained | Contained | Contained |
| | At least one low Vcf domain in Layer contains a particle(s) | - | Contained | Contained | Contained |
| | Area ratio of low Vcf domains present in surface layers and Vcf domains present in inner layer, of Layer | Surface layers : Inner layer | 49:51 | 69:31 | 66:34 |
| | Area proportion of low Vcf domains, when cross-sectional area of cross section in out-of-plane direction of the entire Layer is taken as 100% | % | 25 | 2 | 1 |
| | Number of carbon fibers in contact with adjacent Layer per 2 mm in plane direction | Number | 121 | 29 | 18 |
| | Breakdown at every 0.4 mm interval, of the number of carbon fibers in contact with adjacent Layer per 2 mm in plane direction (*) | Number | 17/24/23/28/29 | 5/5/7/6/6 | 5/3/2/7/1 |
| Particles | Electroconductive particles are contained in Low Vcf domains | - | Contained | Contained | Contained |
| | Thermoplastic particles are contained in Low Vcf domains | - | Contained | Contained | Contained |
| | Average number of particles present within distance of 2 Dm from the center of each particle in Layer | Number | 1.7 | 2.3 | 2.1 |
| Electroconductive properties | Electroconductivity in thickness direction | S/m | 34 | 17 | 14 |
| | Variation in electroconductivity in thickness direction | - | Excellent | Excellent | Fair |
| * "/" indicates the division of sections, and the respective numbers indicate the numbers of carbon fibers in contact with adjacent Layer in 4 mm sections | | | | | |

[Table 5]

Table 5

| | | | Example 1 | Example 13 |
|---|---|---|---|---|
| Composition | Type of resin | - | Resin A | Resin A |
| | Resin content | wt% | 34 | 34 |
| | Amount of carbon particles | wt% | 2 | 2 |
| | Type of carbon particles | μm | ICB 1020 | ICB 0520 |
| | Amount of polymer particles | wt% | 5 | 5 |
| | Amount of electroconductive aid | wt% | 1.5 | 1.5 |
| CFRP | Layer thickness | μm | 252 | 252 |
| | Mean value of carbon fiber volume content factor, Vcf, in Layer | % | 60 | 57 |
| | Low Vcf domains having a Vcf of 0.5 or less, when the mean value of Vcf of Layer is defined as 1, are included in surface layers and in inner layer | - | Contained | Contained |
| | At least one low Vcf domain in Layer contains a particle(s) | - | Contained | Contained |
| | Area ratio of low Vcf domains present in surface layers and Vcf domains present in inner layer, of Layer | Surface layers : Inner layer | 49:51 | 70:30 |
| | Number of carbon fibers in contact with adjacent Layer per 2 mm in plane direction | Number | 121 | 37 |
| | Breakdown at every 0.4 mm interval, of the number of carbon fibers in contact with adjacent Layer per 2 mm in plane direction (*) | Number | 17/24/23/28/29 | 5/7/8/11/6 |
| Particles | Average number of particles present within distance of 2 Dm from the center of each particle in Layer | Number | 1.7 | 1.7 |
| | Median diameter Dm of particles | μm | 12 | 5 |
| | Electroconductive particles are contained in Low Vcf domains | - | Contained | Contained |
| | Thermoplastic particles are contained in Low Vcf domains | - | Contained | Contained |
| Electroconductive properties | Electroconductivity in thickness direction | S/m | 34 | 18 |
| | Variation in electroconductivity in thickness direction | - | Excellent | Excellent |
| * "/" indicates the division of sections, and the respective numbers indicate the numbers of carbon fibers in contact with adjacent Layer in 4 mm sections | | | | |

[Table 6]

Table 6

| | | | Example 3 | Example 14 |
|---|---|---|---|---|
| Composition | Type of resin | - | Resin A | Resin A |
| | Resin content | wt% | 34 | 34 |
| | Amount of carbon particles | wt% | 2 | 2 |
| | Type of carbon particles | μm | ICB4420 | Large diameter CP |
| | Amount of polymer particles | wt% | 5 | 5 |
| | Amount of electroconductive aid | wt% | 1.5 | 1.5 |
| CFRP | Layer thickness | μm | 253 | 252 |
| | Mean value of carbon fiber volume content factor, Vcf, in Layer | % | 59 | 59 |
| | Low Vcf domains having a Vcf of 0.5 or less, when the mean value of Vcf of Layer is defined as 1, are included in surface layers and in inner layer | - | Contained | Contained |
| | At least one low Vcf domain in Layer contains a particle(s) | - | Contained | Contained |
| | Area ratio of low Vcf domains present in surface layers and Vcf domains present in inner layer, of Layer | Surface layers : Inner layer | 70:30 | 69:31 |
| | Number of carbon fibers in contact with adjacent Layer per 2 mm in plane direction | Numbe r | 43 | 40 |
| | Breakdown at every 0.4 mm interval, of the number of carbon fibers in contact with adjacent Layer per 2 mm in plane direction (*) | Numbe r | 6/7/14/7/9 | 13/7/2/12/6 |
| Particles | Average number of particles present within distance of 2 Dm from the center of each particle in Layer | Numbe r | 2.1 | 1.8 |
| | Proportion of particles having a diameter of 50 μm or more | % | 5% | 11% |
| | Electroconductive particles are contained in Low Vcf domains | - | Contained | Contained |
| | Thermoplastic particles are contained in Low Vcf domains | - | Contained | Contained |
| Electroconductive properties | Electroconductivity in thickness direction | S/m | 28 | 21 |
| | Variation in electroconductivity in thickness direction | - | Excellent | Fair |
| * "/" indicates the division of sections, and the respective numbers indicate the numbers of carbon fibers in contact with adjacent Layer in 4 mm sections | | | | |

[Table 7]

Table 7

| | | | Example 8 | Example 15 | Example 16 | Comparative Example 4 |
|---|---|---|---|---|---|---|
| Composition | Type of resin | - | Resin A | Resin A | Resin A | Resin A |
| | Resin content | wt% | 34 | 34 | 34 | 34 |
| | Amount of carbon particles | wt% | 2 | 0 | 0 | 0 |
| | Type of carbon particles | μm | ICB 4420 | - | - | - |
| | Amount of polymer particles | wt% | 10 | 10 | 10 | 10 |
| | Amount of electroconductive aid | wt% | 3 | 3 | 3 | 3 |
| CFRP | Layer thickness | μm | 253 | 254 | 253 | 253 |
| | Mean value of carbon fiber volume content factor, Vcf, in Layer | % | 61 | 58 | 62 | 62 |
| | Low Vcf domains having a Vcf of 0.5 or less, when the mean value of Vcf of Layer is defined as 1, are included in surface layers and in inner layer | - | Contained | Contained | Contained | Not Contained |
| | At least one low Vcf domain in Layer contains a particle(s) | - | Contained | Contained | Contained | - |
| | Area ratio of low Vcf domains present in surface layers and Vcf domains present in inner layer, of Layer | Surface layers : Inner layer | 70:30 | 70:30 | 91:9 | - |
| | Number of carbon fibers in contact with adjacent Layer per 2 mm in plane direction | Number | 46 | 53 | 16 | - |
| | Breakdown at every 0.4 mm interval, of the number of carbon fibers in contact with adjacent Layer per 2 mm in plane direction (*) | Number | 8/13/5/12/8 | 10/9/11/15/8 | 1/7/5/0/3 | - |
| | Area proportion of low Vcf domains, when cross-sectional area of cross section in out-of-plane direction of the entire Layer is taken as 100% | % | 5 | 7 | 5 | - |

(continued)

| | | | Example 8 | Example 15 | Example 16 | Comparative Example 4 |
|---|---|---|---|---|---|---|
| Particles | Median diameter Dm of particles | μm | 23 | 13 | - | - |
| | Proportion of particles having a diameter of 50 μm or more | % | 4% | 4% | - | - |
| | Electroconductive particles are contained in Low Vcf domains | - | Contained | Not Contained | Not Contained | Not Contained |
| | Thermoplastic particles are contained in Low Vcf domains | - | Contained | Contained | Contained | Contained |
| | Average number of particles present within distance of 2 Dm from the center of each particle in Layer | Number | 2.3 | 2.3 | 3.6 | 3.8 |
| | Average distance from the center of each particle to the center of another particle closest to the particle, in Layer | - | 1.7 Dm | 2.5 Dm | 1.1 Dm | 1.1 Dm |
| Electroconductive properties | Electroconductivity in thickness direction | S/m | 49 | 30 | 13 | 0.2 |
| | Variation in electroconductivity in thickness direction | - | Excellent | Excellent | Bad | - |
| Mechanical Properties | CAI | MPa | 249 | 252 | 253 | - |
| * "/" indicates the division of sections, and the respective numbers indicate the numbers of carbon fibers in contact with adjacent Layer in 4 mm sections | | | | | | |

[Table 8]

Table 8

| | | | Example 1 | Example 17 |
|---|---|---|---|---|
| Composition | Type of resin | - | Resin A | Resin A |
| | Resin content | wt% | 34 | 34 |
| | Amount of carbon particles | wt% | 2 | 2 |
| | Type of carbon particles | μm | ICB 1020 | ICB 4420 |
| | Amount of polymer particles | wt% | 5 | 5 |
| | Amount of electroconductive aid | wt% | 1.5 | 1.5 |

(continued)

| | | | Example 1 | Example 17 |
|---|---|---|---|---|
| CFRP | Layer thickness | μm | 252 | 253 |
| | Mean value of carbon fiber volume content factor, Vcf, in Layer | % | 60 | 61 |
| | Low Vcf domains having a Vcf of 0.5 or less, when the mean value of Vcf of Layer is defined as 1, are included in surface layers and in inner layer | - | Contained | Contained |
| | At least one low Vcf domain in Layer contains a particle(s) | - | Contained | Contained |
| | Area ratio of low Vcf domains present in surface layers and Vcf domains present in inner layer, of Layer | Surface layers : Inner layer | 49:51 | 18:82 |
| | Number of carbon fibers in contact with adjacent Layer per 2 mm in plane direction | Number | 121 | 46 |
| | Breakdown at every 0.4 mm interval, of the number of carbon fibers in contact with adjacent Layer per 2 mm in plane direction (*) | Number | 17/24/23/28/29 | 16/1/16/2/11 |
| | Area proportion of low Vcf domains, when cross-sectional area of cross section in out-of-plane direction of the entire Layer is taken as 100% | % | 25 | 51 |
| Particles | Electroconductive particles are contained in Low Vcf domains | - | Contained | Contained |
| | Thermoplastic particles are contained in Low Vcf domains | - | Contained | Contained |
| | Average number of particles present within distance of 2 Dm from the center of each particle in Layer | Number | 1.7 | 2.3 |
| Electroconductive properties | Electroconductivity in thickness direction | S/m | 34 | 37 |
| | Variation in electroconductivity in thickness direction | - | Excellent | Fair |
| * "/" indicates the division of sections, and the respective numbers indicate the numbers of carbon fibers in contact with adjacent Layer in 4 mm sections | | | | |

[Table 9]

Table 9

| | | | Example 3 | Example 18 | Comparative Example 5 |
|---|---|---|---|---|---|
| Composition | Type of resin | - | Resin A | Resin A | Resin A |
| | Resin content | wt% | 34 | 37 | 40 |
| | Amount of carbon particles | wt% | 2 | 2 | 2 |
| | Type of carbon particles | μm | ICB 4420 | ICB 4420 | ICB 4420 |
| | Amount of polymer particles | wt% | 5 | 5 | 5 |
| | Amount of electroconductive aid | wt% | 1.5 | 1.5 | 1.5 |
| CFRP | Layer thickness | μm | 253 | 254 | 281 |
| | Mean value of carbon fiber volume content factor, Vcf, in Layer | % | 59 | 54 | 49 |
| | Low Vcf domains having a Vcf of 0.5 or less, when the mean value of Vcf of Layer is defined as 1, are included in surface layers and in inner layer | - | Contained | Contained | Contained |
| | At least one low Vcf domain in Layer contains a particle(s) | - | Contained | Contained | Contained |
| | Area ratio of low Vcf domains present in surface layers and Vcf domains present in inner layer, of Layer | Surface layers : Inner layer | 70:30 | 69:31 | 69:31 |
| | Number of carbon fibers in contact with adjacent Layer per 2 mm in plane direction | Number | 43 | 19 | 4 |
| | Breakdown at every 0.4 mm interval, of the number of carbon fibers in contact with adjacent Layer per 2 mm in plane direction (*) | Number | 6/7/14/7/9 | 3/4/6/3/3 | 0/1/0/2/1 |
| Particles | Electroconductive particles are contained in Low Vcf domains | - | Contained | Contained | Contained |
| | Thermoplastic particles are contained in Low Vcf domains | - | Contained | Contained | Contained |
| | Average number of particles present within distance of 2 Dm from the center of each particle in Layer | Number | 2.1 | 2.5 | 2.8 |
| | Average distance from the center of each particle to the center of another particle closest to the particle, in Layer | - | 1.8 Dm | 1.5 Dm | 1.4 Dm |
| Electroconductive properties | Electroconductivity in thickness direction | S/m | 28 | 14 | 7 |
| | Variation in electroconductivity in thickness direction | - | Excellent | Good | - |
| * "/" indicates the division of sections, and the respective numbers indicate the numbers of carbon fibers in contact with another layer in 4 mm sections | | | | | |

[Table 10]

Table 10

| | | | Example 8 | Example 19 |
|---|---|---|---|---|
| Composition | Type of resin | - | Resin A | Resin B |
| | Resin content | wt% | 34 | 34 |
| | Amount of carbon particles | wt% | 2 | 2 |
| | Type of carbon particles | μm | ICB 4420 | ICB 4420 |
| | Amount of polymer particles | wt% | 10 | 8.5 |
| | Amount of electroconductive aid | wt% | 3 | 3 |
| CFRP | Layer thickness | μm | 253 | 254 |
| | Mean value of carbon fiber volume content factor, Vcf, in Layer | % | 61 | 61 |
| | Low Vcf domains having a Vcf of 0.5 or less, when the mean value of Vcf of Layer is defined as 1, are included in surface layers and in inner layer | - | Contained | Contained |
| | At least one low Vcf domain in Layer contains a particle(s) | - | Contained | Contained |
| | Area ratio of low Vcf domains present in surface layers and Vcf domains present in inner layer, of Layer | Surface layers : Inner layer | 70:30 | 69:31 |
| | Number of carbon fibers in contact with adjacent Layer per 2 mm in plane direction | Number | 46 | 55 |
| | Breakdown at every 0.4 mm interval, of the number of carbon fibers in contact with adjacent Layer per 2 mm in plane direction (*) | Number | 8/13/5/12/8 | 10/14/9/14/8 |
| | Area proportion of low Vcf domains, when cross-sectional area of cross section in out-of-plane direction of the entire Layer is taken as 100% | % | 5 | 5 |
| Particles | Median diameter Dm of particles | μm | 23 | 23 |
| | Proportion of particles having a diameter of 50 μm or more | % | 4% | 4% |
| | Electroconductive particles are contained in Low Vcf domains | - | Contained | Contained |
| | Thermoplastic particles are contained in Low Vcf domains | - | Contained | Contained |
| | Average number of particles present within distance of 2 Dm from the center of each particle in Layer | Number | 2.3 | 2.2 |
| | Average distance from the center of each particle to the center of another particle closest to the particle, in Layer | - | 1.7 Dm | 2.0 Dm |
| Electroconductive properties | Electroconductivity in thickness direction | S/m | 49 | 45 |
| | Variation in electroconductivity in thickness direction | - | Excellent | Excellent |

(continued)

|  |  |  |  | Example 8 | Example 19 |
|---|---|---|---|---|---|
| Mechanical Properties | CAI | | MPa | 249 | 302 |

\* "/" indicates the division of sections, and the respective numbers indicate the numbers of carbon fibers in contact with another layer in 4 mm sections

Industrial Applicability

The CFRP according to the present invention can be widely applied to the fields that require lightning resistance and the fields that require induction welding. In particular, when the CFRP of the invention is used in an aircraft structural member, the use of conventional lightning protection such as a metal mesh or a sealant can be reduced. Therefore, the CFRP can be suitably used in this field, and enables to simplify conventional lightning protection, and to contribute to a decrease in the weight and a reduction in the cost of an aircraft.

Reference Signs List

1 Carbon fiber
2 Matrix resin impregnated into carbon fiber Layer
3, 3' Particle
20, 23, 24, 25 Inter-Layer resin layer in between with upper adjacent Layer
30, 33,34,35 Inter-Layer resin layer in between with lower adjacent Layer
100 Layer having the same angle of fiber orientation ("Specific Layer")
103, 104, 105 Layer having the same angle of fiber orientation
110, 115 Low Vcf domain
150, 151, 152, 153, 155,156 Outer Layer of "Specific Layer"
160, 161, 165 Inner layer of "Specific Layer"
200, 203, 204, 205 Adjacent Layer present on the upper side
300, 303, 304, 305 Adjacent Layer present on the lower side
1000 One embodiment of CFRP according to the present invention
1003 One form of conventional ordinary CFRP
1004 One form of conventional interlayer-reinforced CFRP
1005 One form of conventional interlayer-reinforced CFRP
3000 Top view of CFRP panel
L1, L4 Layer observed in the middle of Z-axis direction
L2, L5 Adjacent Layer observed on the upper side of Z-axis direction
L3, L6 Adjacent Layer observed on the lower side of Z-axis direction
W1 Entire length in X-axis direction
w11, w12, w13 Section obtained by dividing "Specific Layer" by 0.4 mm in Layer plane direction
A1, A1' Median value of Vcfs of all three Layers
B 1, B 1' Threshold value of Vcf for defining inter-Layer resin layer
C1, C1' Mean value of Vcf of the entire Layer
D1, D1' Threshold value for defining low Vcf domain
E1 Boundary thickness for distinguishing surface layer from inner layer (corresponding to 1/4 thickness of from point 0)
F1 Boundary thickness for distinguishing surface layer from inner layer (corresponding to 3/4 thickness of from point 0)
I1, I1' Portion corresponding to inter-Layer resin layer in between with lower adjacent Layer
J1 Point having the minimum Vcf value in the vicinity of the boundary with upper adjacent Layer
11' Portion corresponding to inter-Layer resin layer in between with upper adjacent Layer
K1 Analysis range for low Vcf domains in "Specific Layer"
F1 Enlarged view within analysis range
P1 Arbitrary pixel
Q1 Range for calculating Vcf
S1, S2, S4 Low Vcf domain

S2', S3' Example of particle present in low Vcf domain
S4' Example of low Vcf domain in which particle is absent
Z3, Z6 Z coordinate of inter-Layer boundary with lower adjacent Layer
Z2, Z5 Z coordinate of inter-Layer boundary with upper adjacent Layer
M1 Portion from which sample for cross sectional observation is cut out
T20, T24, T25 Thickness of inter-Layer resin layer in between with upper adjacent Layer
T30, T34, T35 Thickness of the inter-Layer resin layer in between with lower adjacent Layer
T100, T104, T105 Thickness of Layer

**Claims**

1. A carbon fiber-reinforced composite material comprising carbon fiber sheets including unidirectionally arranged carbon fibers and laminated multidirectionally one on another, said composite material being impregnated with a matrix resin, which is cured, and having an electroconductivity in the thickness direction of 10 S/m or more, wherein, when a region in which the carbon fibers have the same angle of fiber orientation consecutively in the thickness direction is defined as a Layer, said carbon fiber sheet includes at least one Layer that simultaneously satisfies the following (1) to (3) (such a Layer is hereinafter referred to as "Specific Layer"), and at least one low Vcf domain is present in the Specific Layer, said low Vcf domain containing a particle(s):

   (1) the thickness of said Layer is 150 $\mu$m or more;
   (2) the mean value of the carbon fiber volume content factor, Vcf, of said Layer is 50% or more; and
   (3) a low Vcf domain(s) having a Vcf of 0.5 or less, when said mean value of the Vcf is defined as 1, is/are included in the surface layer(s) and in the inner layer of the Specific Layer.

2. The carbon fiber-reinforced composite material according to claim 1, wherein said low Vcf domain(s) is/are included in said surface layer(s) and in said inner layer of the Specific Layer.

3. The carbon fiber-reinforced composite material according to claim 2, wherein the area ratio of said low Vcf domain(s) present in said surface layer(s) and said low Vcf domain(s) present in said inner layer, in a cross section of the Specific Layer, is from 90:10 to 10:90.

4. The carbon fiber-reinforced composite material according to claim 1, wherein, when the cross-sectional area of a cross section in an out-of-plane direction of the entire Specific Layer is taken as 100%, the area proportion of said low Vcf domain(s) in the Specific Layer is 1% or more and 50% or less.

5. The carbon fiber-reinforced composite material according to claim 1, wherein, when the median diameter of particles included in the Specific Layer is defined as Dm, the average number of particles present within a distance of 2 Dm from the center of each particle in the Specific Layer, is 3.5 or less.

6. The carbon fiber-reinforced composite material according to claim 1, wherein, when the median diameter of said particles is defined as Dm, the average distance from the center of each particle to the center of another particle closest to said particle, in the Specific Layer including said particles, is 1.2 Dm or more.

7. The carbon fiber-reinforced composite material according to claim 1, wherein said particles have a sphericity of 0.9 or more.

8. The carbon fiber-reinforced composite material according to claim 1, wherein said particles have a median diameter Dm of 6 $\mu$m or more.

9. The carbon fiber-reinforced composite material according to claim 1, wherein the proportion of particles having a diameter of 50 $\mu$m or more, in said particles contained, is 10% or less.

10. The carbon fiber-reinforced composite material according to claim 1, wherein at least one type of said particles is electroconductive particles.

**11.** The carbon fiber-reinforced composite material according to claim 10, wherein said electroconductive particles are carbon particles.

**12.** The carbon fiber-reinforced composite material according to claim 1, wherein at least one type of said particles is polymer particles.

**13.** The carbon fiber-reinforced composite material according to claim 12, wherein said polymer particles are polyamide particles.

**14.** The carbon fiber-reinforced composite material according to claim 1,

wherein five or more carbon fibers included in the Specific Layer are in contact with carbon fibers included in at least one Layer, of Layers adjacent to the Specific Layer, in a section of 2 mm in the plane direction of the Specific Layer; and

wherein, when said section of 2 mm of the Specific Layer is observed at every 0.4 mm interval, at least one or more carbon fibers included in the Specific Layer are in contact with said carbon fibers included in said at least one adjacent Layer, in all of the 0.4 mm-sections.

**15.** A structure composed of the carbon fiber-reinforced composite material according to any one of claims 1 to 15, wherein the shape of said structure is selected from the group consisting of a flat plate structure, a cylindrical structure, a box-shaped structure, a C-shaped structure, an H-shaped structure, an L-shaped structure, a T-shaped structure, an I-shaped structure, a Z-shaped structure and a hat-shaped structure.

FIG. 1

FIG. 2

FIG. 3

EP 4 424 486 A1

FIG. 4

46

FIG. 5

FIG. 6

Ratio with respect to mean value of Vcf of entire Layer

FIG. 7

FIG. 8

FIG. 9

1003

203

23

103

33

303

FIG. 10

FIG. 11

FIG. 12

FIG. 13

FIG. 14

FIG. 15

FIG. 16

FIG. 17

## INTERNATIONAL SEARCH REPORT

| International application No. |
|---|
| **PCT/JP2022/039900** |

**A. CLASSIFICATION OF SUBJECT MATTER**

*B29B 11/16*(2006.01)i; *B29K 105/10*(2006.01)n; *C08J 5/04*(2006.01)i; *C08J 5/24*(2006.01)i
FI:   C08J5/04; B29B11/16; C08J5/24; B29K105:10

According to International Patent Classification (IPC) or to both national classification and IPC

**B. FIELDS SEARCHED**

Minimum documentation searched (classification system followed by classification symbols)

B29B11/16; B29K105/10; C08J5/04; C08J5/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-132932 A (TORAY INDUSTRIES, INC.) 03 August 2017 (2017-08-03) claims, paragraphs [0171]-[0232], examples | 1-15 |
| A | WO 2021/131740 A1 (TORAY INDUSTRIES, INC.) 01 July 2021 (2021-07-01) claims, example 31 | 1-15 |
| A | JP 2008-231395 A (TORAY INDUSTRIES, INC.) 02 October 2008 (2008-10-02) claims, examples, entire text | 1-15 |
| A | WO 2017/179666 A1 (TOHO TENAX CO., LTD.) 19 October 2017 (2017-10-19) claims, examples, entire text | 1-15 |
| P, X | WO 2022/004586 A1 (TORAY INDUSTRIES, INC.) 06 January 2022 (2022-01-06) claims, examples, entire text | 1-15 |
| P, A | JP 2021-172694 A (TEIJIN LTD.) 01 November 2021 (2021-11-01) claims, examples, entire text | 1-15 |
| E, A | WO 2022/230800 A1 (TORAY INDUSTRIES, INC.) 03 November 2022 (2022-11-03) claims, examples, entire text | 1-15 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 December 2022** | **10 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/039900**

| Patent document cited in search report | | | Publication date (day/month/year) | Patent family member(s) | | | Publication date (day/month/year) |
|---|---|---|---|---|---|---|---|
| JP | 2017-132932 | A | 03 August 2017 | (Family: none) | | | |
| WO | 2021/131740 | A1 | 01 July 2021 | EP 4011930 A1 claims, example 31 | | | |
| JP | 2008-231395 | A | 02 October 2008 | JP 2010-280903 A | | | |
| | | | | US 2010/0178487 A1 claims, examples, entire text | | | |
| | | | | JP 2010-280904 A | | | |
| | | | | JP 2011-219766 A | | | |
| | | | | JP 2011-231331 A | | | |
| | | | | JP 2012-167282 A | | | |
| | | | | JP 2012-188670 A | | | |
| | | | | JP 2012-197447 A | | | |
| | | | | JP 2013-155379 A | | | |
| | | | | JP 2013-224435 A | | | |
| | | | | US 2011/0287246 A1 | | | |
| | | | | US 2011/0291056 A1 | | | |
| | | | | US 2011/0147674 A1 | | | |
| | | | | US 2011/0151235 A1 | | | |
| | | | | US 2012/0058297 A1 | | | |
| | | | | US 2015/0368857 A1 | | | |
| | | | | WO 2008/018421 A1 | | | |
| | | | | EP 2053078 A1 | | | |
| | | | | EP 2452967 A1 | | | |
| | | | | EP 2455418 A1 | | | |
| | | | | EP 2455419 A1 | | | |
| | | | | EP 2460846 A1 | | | |
| | | | | EP 2666807 A2 | | | |
| | | | | CA 2659431 A | | | |
| | | | | CN 101501114 A | | | |
| | | | | CN 102838766 A | | | |
| | | | | CN 103396576 A | | | |
| | | | | CN 103396577 A | | | |
| WO | 2017/179666 | A1 | 19 October 2017 | JP 2018-145582 A | | | |
| | | | | US 2019/0062511 A1 claims, examples, entire text | | | |
| | | | | EP 3444089 A1 | | | |
| | | | | CA 3020670 A | | | |
| | | | | CN 109311184 A | | | |
| WO | 2022/004586 | A1 | 06 January 2022 | (Family: none) | | | |
| JP | 2021-172694 | A | 01 November 2021 | (Family: none) | | | |
| WO | 2022/230800 | A1 | 03 November 2022 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008018421 A
- WO 2011027160 A
- WO 2012124450 A
- JP 1104624 A
- WO 2018173618 A
- WO 2018173619 A
- WO 2017110991 A
- WO 2018207728 A

### Non-patent literature cited in the description

- **R. B. GREEGOR et al.** Finite Element Simulation and Experimental Analysis of Edge Glow for a Generic, 16-Ply Carbon Fiber Reinforced Plastic Composite Laminate. *ICOLSE 15 Paper,* 2015
- *Carbon,* 1995, (168), 157-163
- **X. XU et al.** *Journal of NDT and E International,* 2018, vol. 94, 79-91
- **K. MIZUKAMI et al.** *Journal of Polymer Testing,* 2018, vol. 69, 320-324
- **TORIKAI ; KUZE.** Aircraft Structural Design. Japan Aeronautical Engineers' Association, 2003